# EUROPEAN PATENT APPLICATION

(11) **EP 4 050 714 A1**
(43) Date of publication of application: **31.08.2022**
(21) Application number: 20879609.4
(22) Date of filing: 22.10.2020
(51) Int. Cl.: H01M 50/20, H01G 11/12, H01G 11/14, H01G 11/78

(54) **ELECTRICAL STORAGE DEVICE**

(30) Priority: 23.10.2019 JP 2019192448
(71) Applicant: GS Yuasa International Ltd., Kisshoin, Minami-ku, Kyoto-shi, Kyoto 601-8520 (JP)
(72) Inventor: HIDAKA, Tsuyoshi, Ritto-shi, Shiga 520-3021 (JP); KAWAUCHI, Tomohiro, Ritto-shi, Shiga 520-3021 (JP); KUSUNOKI, Toshiki, Ritto-shi, Shiga 520-3021 (JP)
(74) Representative: Grünecker Patent- und Rechtsanwälte PartG mbB
(86) International application number: PCT/JP2020/039722
(87) International publication number: WO 2021/079934

(57) **Abstract**

An energy storage apparatus (1) includes: an energy storage unit (10) including an energy storage device (11); a substrate (200) electrically connected to the energy storage unit (10); a cover (120) disposed on one side in a first direction of the substrate (200); and a cable (30) in which one end is electrically connected to the energy storage unit (10) while the other end is connected to an external conductive member of the energy storage apparatus (1). The cable (30) is disposed on one side in the first direction of at least a part of the cover (120) while connected to the external conductive member.

## Description

### TECHNICAL FIELD

The present invention relates to an energy storage apparatus including an energy storage device and a substrate.

### BACKGROUND ART

Conventionally, an energy storage apparatus including an energy storage device and a substrate is widely known. Patent Literature 1 discloses a configuration (energy storage apparatus) including an assembled battery in which a plurality of unit cells (energy storage devices) are connected in series to output a desired voltage and a control substrate (substrate) that is accommodated in a substrate accommodating unit to control an output voltage based on a voltage detection result of each of the plurality of unit cells.

### PRIOR ART DOCUMENT

### PATENT DOCUMENT

Patent Document 1: JP-A-2013-51190

### SUMMARY OF THE INVENTION

### PROBLEMS TO BE SOLVED BY THE INVENTION

In the conventional energy storage apparatus described above, work for the substrate can be performed even in a state where a cable of the energy storage apparatus and the external conductive member are not disconnected. Therefore, safety is required to be improved.

An object of the present invention is to provide an energy storage apparatus in which the safety can be improved.

### MEANS FOR SOLVING THE PROBLEMS

According to one aspect of the present invention, an energy storage apparatus including an energy storage unit including an energy storage device, the energy storage apparatus includes: a substrate electrically connected to the energy storage unit; a cover disposed on one side in a first direction of the substrate; and a cable in which one end is electrically connected to the energy storage unit while the other end is connected to an external conductive member of the energy storage apparatus. The cable is disposed on one side in the first direction of at least a part of the cover while connected to the external conductive member.

The present invention can be implemented as not only the energy storage apparatus but also the cover or a combination of the cover and the cable.

### ADVANTAGES OF THE INVENTION

The energy storage apparatus of the present invention can improve the safety.

### BRIEF DESCRIPTION OF THE DRAWINGS

Fig. 1 is a perspective view illustrating an appearance of an energy storage apparatus according to an embodiment.
Fig. 2 is a perspective view illustrating a configuration when the energy storage apparatus of the embodiment is separated into an energy storage unit and a substrate unit.
Fig. 3 is an exploded perspective view illustrating each component when the energy storage unit of the embodiment is disassembled.
Fig. 4 is an exploded perspective view illustrating each component when the substrate unit of the embodiment is disassembled.
Fig. 5 is a perspective view, a sectional view, and a side view illustrating a configuration of the substrate unit of the embodiment.
Fig. 6 is a sectional view illustrating the configuration of the substrate unit of the embodiment.
Fig. 7 is a perspective view, a front view, and a side view illustrating the configuration in a state where a cover is opened in the substrate unit of the embodiment.
Fig. 8 is a perspective view and a sectional view illustrating a configuration while a substrate holder is rotated with respect to a substrate unit attaching unit of an outer case support of the embodiment.
Fig. 9 is a perspective view illustrating a configuration while a cable is disposed in a cable disposing unit of the substrate unit of the embodiment.
Fig. 10 is a front view illustrating a connection configuration of the cable in the energy storage apparatus of the embodiment.
Fig. 11 is a perspective view illustrating a configuration of a cable disposing unit of a cover according to a modification example of the embodiment.

### MODE FOR CARRYING OUT THE INVENTION

In an energy storage apparatus including a substrate, when work is performed on the substrate, desirably the work for the substrate is performed after disconnecting connection between a cable of the energy storage apparatus and an external conductive member (a cable and the like of an adjacent energy storage apparatus) in order to improve safety. However, in the above conventional energy storage apparatus, because the work for the substrate can be performed even in the state where the connection is not disconnected, there is a risk that the work for the substrate is performed without disconnecting the connection. As described above, the inventor of the present application has found that further improvement of the safety is required in the conventional energy storage apparatus.

According to one aspect of the present invention, an energy storage apparatus including an energy storage unit including an energy storage device, the energy storage apparatus includes: a substrate electrically connected to the energy storage unit; a cover disposed on one side in a first direction of the substrate; and a cable in which one end is electrically connected to the energy storage unit while the other end is connected to an external conductive member of the energy storage apparatus. The cable is disposed on one side in the first direction of at least a part of the cover while connected to the external conductive member.

Thus, in the energy storage apparatus, the cable is disposed on one side in the first direction of at least a part of the cover disposed on one side in the first direction of the substrate while connected to the external conductive member. In this way, the cover is disposed outside the substrate, and the cable is disposed outside at least a part of the cover while the cable is connected to the external conductive member (the adjacent energy storage apparatus or the like). Thus, the cover cannot be opened unless the cable is detached from the external conductive member to move the cable, so that the work for the substrate. Consequently, the cable of the energy storage apparatus and the external conductive member are disconnected from each other before the work for the substrate is performed, so that the safety can be improved.

Preferably the energy storage unit is disposed on the other side in the first direction of the cover, and the cable protrudes from the energy storage unit, extends to one side in the first direction, is disposed on one side in the first direction of the at least a part of the cover, and is connected to the external conductive member.

Thus, in the energy storage apparatus, the cable protrudes from the energy storage unit to extend on one side in the first direction, so that the cable is crossed on one side in the first direction, disposed on one side in the first direction of at least a part of the cover, and connected to the external conductive member. In this way, the cable is disposed so as to wind (hold) at least a part of the cover. Thus, the opening of the cover can be prevented while the cable is connected to the external conductive member, so that safety can be improved.

Preferably the cover includes a first recess that is recessed toward one side in a second direction intersecting the first direction, and the cable is disposed in the first recess.

According to this, the cable can be positioned with respect to the cover by disposing the cable in the first recess recessed to one side in the second direction of the cover, so that the cable can be stably disposed on one side in the first direction of at least a part of the cover. Thus, the opening of the cover can be prevented while the cable is connected to the external conductive member, so that safety can be improved.

Preferably the cover includes a second recess recessed toward one side in the first direction and a third recess recessed from the second recess to one side or the other side in a second direction intersecting the first direction, and the cable is disposed in the third recess.

According to this, the second recess recessed to one side in the first direction and the third recess recessed from the second recess to one side or the other side in the second direction are formed in the cover, and the cable is disposed in the third recess, whereby a part of the cover is disposed on the other side in the first direction of the cable. Thus, the opening of the cover can be prevented while the cable is connected to the external conductive member, so that safety can be improved.

Preferably the cover includes a regulating unit that regulates movement of the cable, and the cable is disposed on one side in a second direction intersecting the first direction of the regulating unit, so that the regulating unit regulates the movement of the cable to the other side in the second direction.

According to this, the cover regulates the movement of the cable to the other side in the second direction by the regulating unit, it is possible to suppress so that the cable can be prevented from moving from one side in the first direction of the cover. Thus, the opening of the cover can be prevented while the cable is connected to the external conductive member, so that safety can be improved.

The energy storage apparatus further includes a substrate holder that holds the substrate and to which the cover is attached. Preferably the cover is rotatably attached to the substrate holder.

Because the cover is rotatably attached to the substrate holder, the cover is required to be rotated with respect to the substrate holder in order to open the cover to detach the substrate. However, the cover cannot be rotated when at least a part of the cover is disposed on the other side in the first direction of the cable. Thus, the cover cannot be opened unless the cable is detached from the external conductive member to move the cable, so that the safety can be improved.

Hereinafter, an energy storage apparatus according to an embodiment (including a modification example of the present invention) will be described with reference to the drawings. The embodiment described below illustrates a comprehensive or specific example. Numerical values, shapes, materials, components, dispositions of the components, connection forms of the components, and the like described in the following embodiment are merely examples, and are not intended to limit the present invention. In each of the drawings, dimensions and the like are not strictly illustrated.

In the following description and drawings, an arrangement direction of a pair of electrode terminals (a positive electrode terminal and a negative electrode terminal) in one energy storage device, a facing direction in which short side surfaces of a case of the energy storage device face each other, or a facing direction in which long side surfaces of an outer case of the energy storage unit faces each other, is defined as an X-axis direction. An arrangement direction of the plurality of energy storage devices, a facing direction in which long side surfaces of the case of the energy storage devices face each other, a facing direction in which short side surfaces of the outer case of the energy storage unit face each other, an arrangement direction of the energy storage unit and the substrate unit, or an arrangement direction of the substrate holder of the substrate unit, the substrate, and the cover is defined as a Y-axis direction. An arrangement direction of an outer case support and an outer case lid of the energy storage unit, an arrangement direction of the energy storage device and a bus bar, an arrangement direction of a case body and a lid of the energy storage device, or a vertical direction is defined as a Z-axis direction. The X-axis direction, the Y-axis direction, and the Z-axis direction are directions intersecting with one another (orthogonal to one another in the embodiment). Although it may be conceivable that the Z-axis direction is not in the vertical direction depending on a mode of use, hereinafter the Z-axis direction is described as the vertical direction for convenience of explanation.

In the following description, an X-axis positive direction indicates an arrow direction side of the X-axis, and an X-axis negative direction indicates an opposite direction to the X-axis positive direction. The same applies to the Y-axis direction and the Z-axis direction. Hereinafter, the Y-axis direction is also referred to as the first direction, the Y-axis negative direction is also referred to as one side of the first direction, and the Y-axis positive direction is also referred to as the other side of the first direction. Hereinafter, the Z-axis direction is also referred to as the second direction, the Z-axis negative direction is also referred to as one side of the second direction, and the Z-axis positive direction is also referred to as the other side of the second direction. An expression indicating a relative direction or a posture such as parallel and orthogonal strictly also includes the case where the expression is not the direction or the posture. For example, two directions orthogonal to each other means not only that the two directions are completely orthogonal to each other, but also that the two directions are substantially orthogonal to each other, namely, includes a difference of, for example, about several percent.

### (Embodiment)

### [1 General description of energy storage apparatus 1]

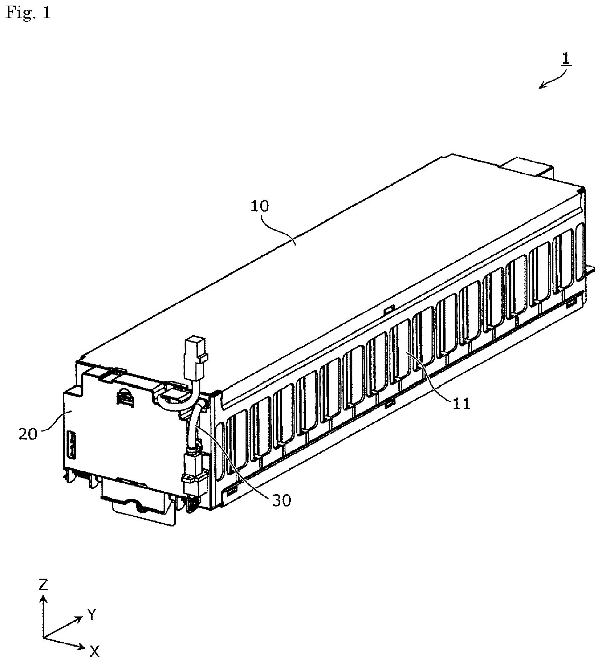

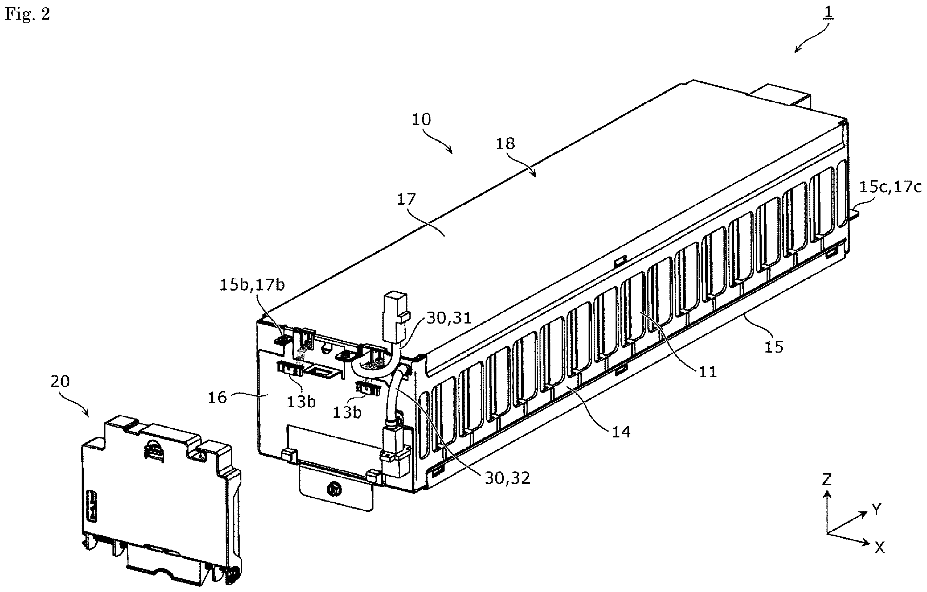

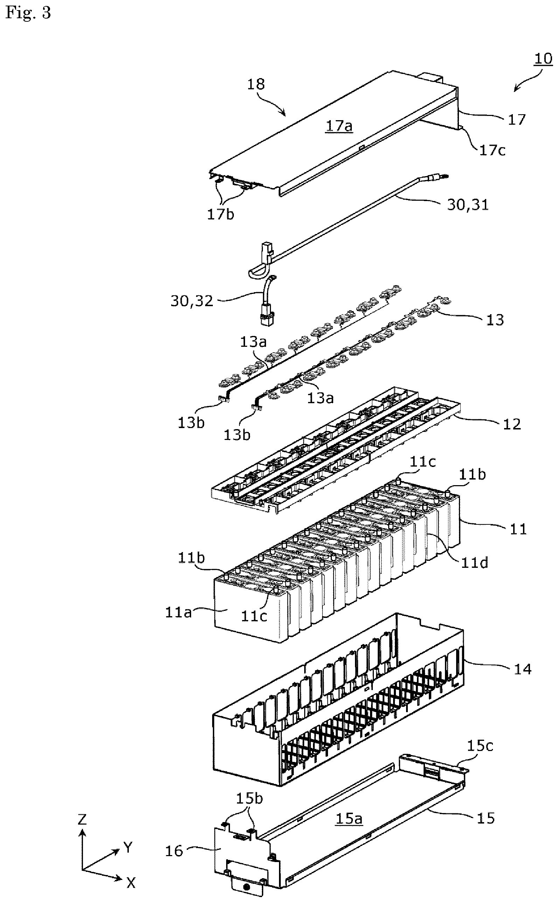

A configuration of an energy storage apparatus 1 according to the embodiment will be described. Fig. 1 is a perspective view illustrating an appearance of the energy storage apparatus 1 of the embodiment. Fig. 2 is a perspective view illustrating a configuration when the energy storage apparatus 1 of the embodiment is separated into an energy storage unit 10 and a substrate unit 20. Fig. 3 is an exploded perspective view illustrating each component when the energy storage unit 10 of the embodiment is disassembled.

The energy storage apparatus 1 is an apparatus capable of charging electricity from the outside and discharging electricity to the outside, and has a substantially rectangular parallelepiped shape in the embodiment. The energy storage apparatus 1 is used for a power storage application, a power supply application, and the like. Specifically, for example, the energy storage apparatus 1 is used as a battery for driving a moving body such as automobiles, motorcycles, watercrafts, vessels, snowmobiles, agricultural machines, construction machines, and railroad vehicles for electric railroad or starting an engine. Examples of the automobiles include an electric vehicle (EV), a hybrid electric vehicle (HEV), a plug-in hybrid electric vehicle (PHEV), and a gasoline automobile. Examples of the railway vehicles for electric railway include a train, a monorail, and a linear motor car. The energy storage apparatus 1 can also be used as a stationary battery or the like used for home use, a generator, or the like.

As illustrated in these drawings, the energy storage apparatus 1 includes the energy storage unit 10 and the substrate unit 20 attached to the energy storage unit 10. First, a configuration of the energy storage unit 10 will be described in detail. The energy storage unit 10 is a battery module (assembled battery) having a substantially rectangular parallelepiped shape elongated in the Y-axis direction. Specifically, the energy storage unit 10 includes a plurality of energy storage devices 11, a bus bar frame 12, a plurality of bus bars 13, an outer case body 14 that accommodates the plurality of energy storage devices 11, the bus bar frame 12, and the plurality of bus bars 13, and an outer case 18 including an outer case support 15 and an outer case lid 17. A cable 30 is connected to the energy storage unit 10. The energy storage unit 10 may include a restraint member (end plate, side plate, and the like) that restrains the plurality of energy storage devices 11.

The energy storage device 11 is a secondary battery (battery cell) that can charge and discharge the electricity, more specifically a nonaqueous electrolyte secondary battery such as a lithium ion secondary battery. The energy storage device 11 has a flat, rectangular parallelepiped (prismatic) shape. In the embodiment, sixteen energy storage devices 11 are arrayed in the Y-axis direction. A shape, an arrangement position, a number, and the like of the energy storage device 11 are not particularly limited. The energy storage device 11 is not limited to the nonaqueous electrolyte secondary battery, but may be a secondary battery except for the nonaqueous electrolyte secondary battery or a capacitor. The energy storage device 11 is not the secondary battery, but may be a primary battery that can use stored electricity without being charged by a user. The energy storage device 11 may be a battery in which a solid electrolyte is used. The energy storage device 11 may be a pouch type energy storage device.

Specifically, the energy storage device 11 includes a metal case 11a, and a positive electrode terminal 11b and a negative electrode terminal 11c that are metal electrode terminals are provided in a lid of the case 11a. A spacer 11d is disposed between the adjacent energy storage devices 11. An electrolyte solution filling unit that injects an electrolyte solution, a gas release valve that discharges gas to release pressure during pressure rise in the case 11a, and the like may be provided in the lid of the case 11a. An electrode assembly (also referred to as an energy storage element or a power generating element), a current collector (a positive electrode current collector and a negative electrode current collector), and the like are disposed in the case 11a, and the electrolyte solution (nonaqueous electrolyte) or the like is enclosed in the case 11a. However, the detailed description is omitted.

The positive electrode terminal 11b and the negative electrode terminal 11c are disposed so as to protrude upward (Z-axis positive direction) from the lid of the case 11a. The outermost positive electrode terminal 11b and the negative electrode terminal 11c that are included in the plurality of energy storage devices 11 are connected to the cable 30, which allows the energy storage apparatus 1 to charge and discharge the electricity from and to an outside. The cable 30 is an electric wire (also referred to as a main circuit cable, a power supply cable, a power cable, a power supply line, and a power line) through which current (also referred to as a charge-discharge current and a main current) charging and discharging the energy storage apparatus 1 (energy storage device 11) flows, and includes a positive electrode power cable 31 on the positive electrode side and a negative electrode power cable 32 on the negative electrode side. That is, among the plurality of energy storage devices 11, the positive electrode power cable 31 of the cable 30 is connected to the positive electrode terminal 11b of the energy storage device 11 at an end in the Y-axis positive direction, and the negative electrode power cable 32 of the cable 30 is connected to the negative electrode terminal 11c of the energy storage device 11 at an end in the Y-axis negative direction.

The bus bar frame 12 is a flat rectangular member capable of electrically insulating the bus bars 13 from other members and regulating the position of the bus bar 13. The bus bar frame 12 is formed of an insulating member or the like, such as polycarbonate (PC), polypropylene (PP), or polyethylene (PE), which is similar to materials listed in a substrate accommodating unit 100 of the substrate unit 20 described later. Specifically, the bus bar frame 12 is placed above the plurality of energy storage devices 11, and is positioned with respect to the plurality of energy storage devices 11. The bus bar 13 is placed and positioned on the bus bar frame 12. Thus, the bus bar 13 is positioned with respect to the plurality of energy storage devices 11, and is joined to the positive electrode terminals 11b and the negative electrode terminals 11c that are included in the plurality of energy storage devices 11. The bus bar frame 12 also has a function of reinforcing the outer case body 14 as an inner lid of the outer case 18.

The bus bar 13 is a rectangular plate-shaped member that is disposed on the plurality of energy storage devices 11 (on the bus bar frame 12) and electrically connects the electrode terminals of the plurality of energy storage devices 11 to each other. The bus bar 13 is made of metal such as aluminum, and an aluminum alloy, copper, a copper alloy, and stainless steel. In the embodiment, the bus bar 13 connects the positive electrode terminal 11b and the negative electrode terminal 11c of the adjacent energy storage devices 11, thereby connecting the sixteen energy storage devices 11 in series. The connection state of the energy storage device 11 is not limited to the above connection, but series connection and parallel connection may be combined in any way.

A cable 13a is connected to the bus bar 13 or the electrode terminal of the energy storage device 11. The cable 13a is an electric wire (also referred to as a communication cable, a control cable, a communication line, and a control line) for measuring a voltage of the energy storage device 11, for measuring a temperature of the energy storage device 11, or for voltage balancing between the energy storage devices 11. Although a thermistor (not illustrated) measuring the temperature of the energy storage device 11 is disposed on the bus bar 13 or the electrode terminal of the energy storage device 11, the description thereof is omitted. A connector 13b is connected to the end in the Y-axis negative direction of the cable 13a. The connector 13b is a connector connected to a substrate 200 of the substrate unit 20 described later. That is, the cable 13a transmits information such as voltage and temperature of the energy storage device 11 to the substrate 200 of the substrate unit 20 through the connector 13b. The cable 13a also has a function of discharging the energy storage device 11 having the high voltage and balancing the voltages between the energy storage devices 11 by controlling the substrate 200.

The outer case 18 is a rectangular (box-shaped) case (module case) constituting an outer case of the energy storage unit 10. That is, the outer case 18 is disposed outside the energy storage device 11 and the like, and fixes the energy storage device 11 and the like at predetermined positions to protect the energy storage device 11 and the like from an impact and the like. The outer case 18 includes the outer case body 14 constituting a body of the outer case 18, the outer case support 15 supporting the outer case body 14, and the outer case lid 17 constituting a lid (outer lid) of the outer case 18.

The outer case body 14 is a bottomed rectangular cylindrical housing in which an opening is formed on an upper surface. The outer case body 14 is made of an insulating member or the like such as PC, PP, or PE that is the same as the material listed in the substrate accommodating unit 100 of the substrate unit 20 described later. The outer case support 15 and the outer case lid 17 are members that protect (reinforce) the outer case body 14. The outer case support 15 and the outer case lid 17 are made of a metal member such as stainless steel, aluminum, an aluminum alloy, iron, or a plated steel plate. The outer case support 15 and the outer case lid 17 may be made of a member made of the same material, or made of members made of different materials.

The outer case support 15 is a member that supports the outer case body 14 from a lower side (Z-axis negative direction), and includes a bottom 15a, a substrate unit attaching unit 16, and connection units 15b and 15c. The bottom 15a is a flat plate-like and rectangular member that forms a bottom of the energy storage apparatus 1 and extends in parallel to an XY-plane and in the Y-axis direction, and is disposed below the outer case body 14. The substrate unit attaching unit 16 is a flat plate-shaped and rectangular member erected in the Z-axis positive direction from the end on the Y-axis negative direction side of the bottom 15a, and the substrate unit 20 is attached to the substrate unit attaching unit 16. The connection unit 15b is a member that is disposed at the end on the Z-axis positive direction side of the substrate unit attaching unit 16 and projects in the Y-axis negative direction, and is connected to the outer case lid 17. The connection unit 15c is a member that is erected on the Z-axis positive direction side from the end in the Y-axis positive direction of the bottom 15a and projects in the Y-axis positive direction, and is connected to the outer case lid 17.

The outer case lid 17 is a member that is disposed so as to close the opening of the upper surface of the outer case body 14, and includes a top surface 17a and connection units 17b and 17c. The top surface 17a is a flat plate-like and rectangular member that forms an upper surface of the energy storage apparatus 1 and extends in parallel to the XY-plane and in the Y-axis direction, and is disposed above the outer case body 14. The connection unit 17b is a member that is disposed at the end on the Y-axis negative direction side of the top surface 17a, extends in the Z-axis negative direction, and protrudes in the Y-axis negative direction, and is connected to the connection unit 15b of the outer case support 15. The connection unit 17c is a member that extends in the Z-axis negative direction from the end on the Y-axis positive direction side of the top surface 17a and projects in the Y-axis positive direction, and is connected to the connection unit 15c of the outer case support 15. Thus, the outer case support 15 and the outer case lid 17 are fixed by connecting the connection units 15b and 15c and the connection units 17b and 17c by screwing or the like while the outer case body 14 is sandwiched from the vertical direction.

The substrate unit 20 is a device capable of monitoring the state of the energy storage device 11 included in the energy storage unit 10 and controlling the energy storage device 11. In the embodiment, the substrate unit 20 is a flat rectangular member attached to the end in the longitudinal direction of the energy storage unit 10, namely, the side surface on the Y-axis negative direction side of the energy storage unit 10. Specifically, the substrate unit 20 is rotatably attached to a substrate unit attaching unit 16 that is provided on the outer case support 15 included in the outer case 18 of the energy storage unit 10. The configuration of the substrate unit 20 will be described in detail below.

### [2 Description of configuration of substrate unit 20]

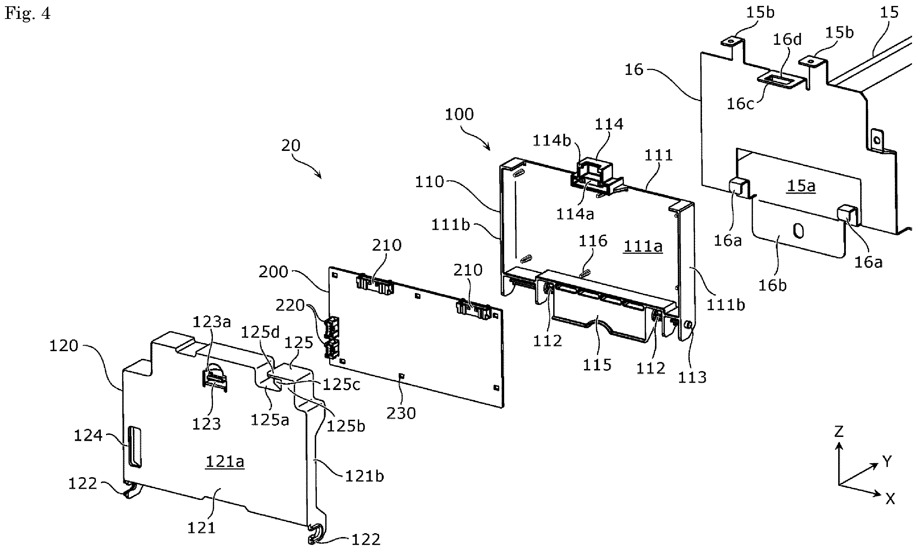

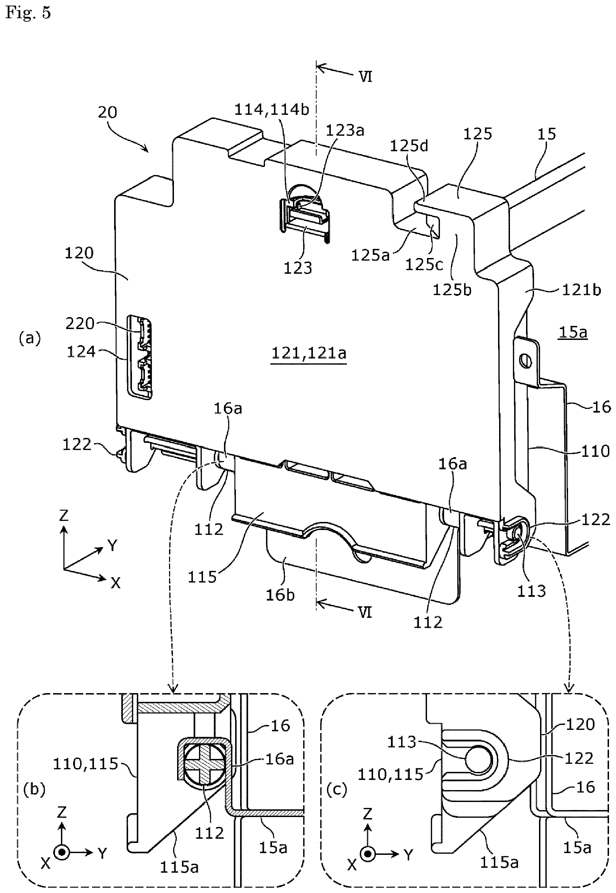

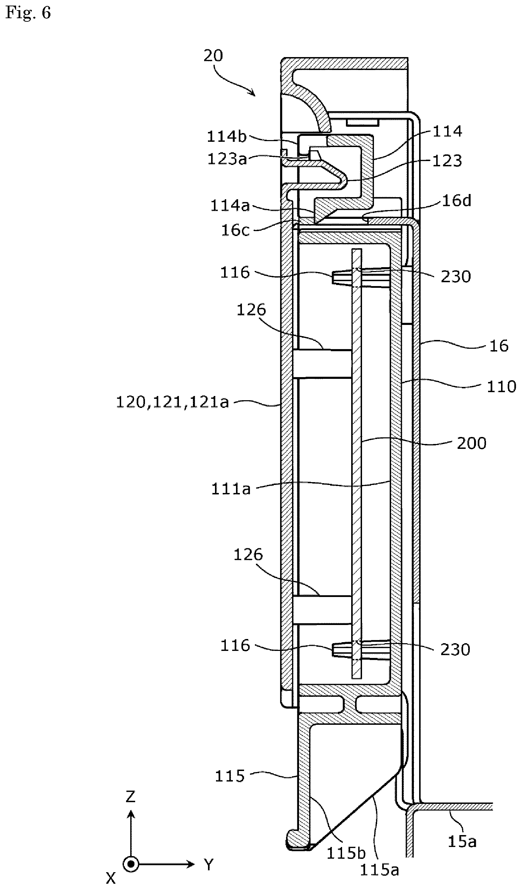

Fig. 4 is an exploded perspective view illustrating each component when the substrate unit 20 of the embodiment is disassembled. Fig. 5 is a perspective view, a sectional view, and a side view illustrating a configuration of the substrate unit 20 of the embodiment. Specifically, a part (a) of Fig. 5 is a perspective view illustrating the configuration while the substrate unit 20 in Fig. 2 is attached to the substrate unit attaching unit 16 of the outer case support 15. Apart (b) of Fig. 5 is a sectional view illustrating an attachment configuration of the substrate unit attaching unit 16 and a substrate holder 110. Apart (c) of Fig. 5 is a side view illustrating an attachment configuration of the substrate holder 110 and a cover 120. Fig. 6 is a sectional view illustrating the configuration of the substrate unit 20 of the embodiment. Specifically, Fig. 6 is the sectional view illustrating the configuration when the substrate unit 20 in the part (a) of Fig. 5 is cut along a VI-VI section.

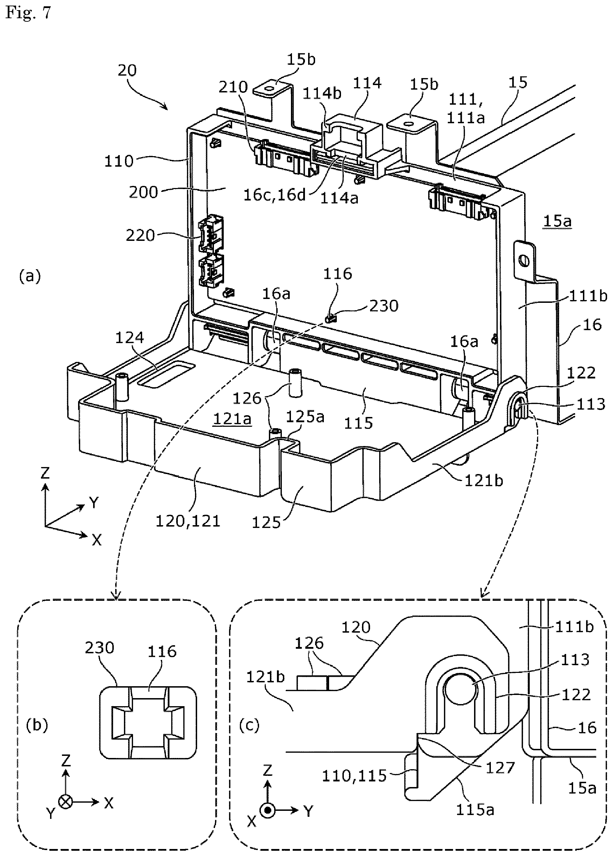

Fig. 7 is a perspective view, a front view, and a side view illustrating the configuration in the state where the cover 120 is opened in the substrate unit 20 of the embodiment. Specifically, a part (a) of Fig. 7 is a perspective view illustrating the configuration in the state where the cover 120 is rotated with respect to the substrate holder 110 in the substrate unit 20 in Fig. 5. Apart (b) of Fig. 7 is a partial front view illustrating a configuration in the state where a through-hole 230 of the substrate 200 and a fixing unit 116 of the substrate holder 110 are viewed from the Y-axis negative direction. Apart (c) of Fig. 7 is a partial side view illustrating an attaching configuration of the substrate holder 110 and the cover 120, and is a view corresponding to the part (c) of Fig. 5.

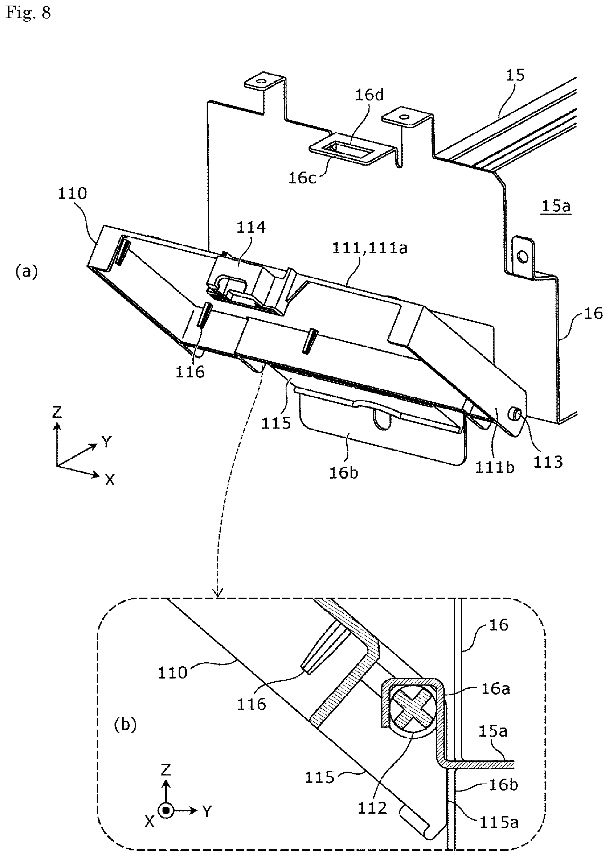

Fig. 8 is a perspective view and a sectional view illustrating a configuration in the state where the substrate holder 110 is rotated with respect to the substrate unit attaching unit 16 of the outer case support 15 of the embodiment. Specifically, a part (a) of Fig. 8 is a perspective view illustrating a configuration in the state where the substrate holder 110 is rotated until the substrate holder 110 can be rotated with respect to the substrate unit attaching unit 16 (until the rotation of the substrate holder 110 is regulated). Apart (b) of Fig. 8 is a sectional view illustrating the attaching configuration of the substrate unit attaching unit 16 and the substrate holder 110, and is a view corresponding to the part (b) of Fig. 5.

As illustrated in these drawings, the substrate unit 20 includes the substrate accommodating unit 100 and the substrate 200 accommodated in the substrate accommodating unit 100. That is, the substrate accommodating unit 100 accommodates and fixes the substrate 200 at a predetermined position, and protects the substrate 200 from the impact or the like. The substrate accommodating unit 100 is formed of an insulating member such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene-perfluoroalkyl vinyl ether (PFA), polytetrafluoroethylene (PTFE), polyether sulfone (PES), an ABS resin, or a composite material thereof or an insulation-coated metal. This enables the substrate accommodating unit 100 to prevent the substrate 200 from contacting with a metal member of the outside and the like. The substrate accommodating unit 100 may be formed of a conductive member such as metal as long as an electrical insulation property of the substrate 200 is maintained.

The substrate accommodating unit 100 is rotatably attached to the side surface (the substrate unit attaching unit 16 of the outer case support 15) in the horizontal direction (specifically, the Y-axis negative direction (one side in the first direction)) of the outer case 18 of the energy storage unit 10 in the erected posture. The substrate accommodating unit 100 includes the substrate holder 110 holding the substrate 200 and the cover 120 attached to the substrate holder 110. That is, the substrate 200 and the substrate accommodating unit 100 (the substrate holder 110 and the cover 120) are disposed in the Y-axis negative direction (one side in the first direction) of the energy storage unit 10 in the erected posture. In other words, the energy storage unit 10 is disposed in the Y-axis negative direction (the other side in the first direction) of the substrate 200 and the substrate accommodating unit 100 (the substrate holder 110 and the cover 120). Configurations of the substrate 200, and the substrate holder 110 and the cover 120 that are included in the substrate accommodating unit 100 will be described in detail below.

### [2.1 Description of substrate 200]

The substrate 200 is a circuit substrate (monitoring substrate) electrically connected to the energy storage unit 10. Specifically, the substrate 200 is electrically connected to the energy storage device 11 through the cable 13a and the connector 13b to acquire information such as the voltage and the temperature of the energy storage device 11 and monitor states such as a charge state and a discharge state of the energy storage device 11. The substrate 200 also has a function as a control substrate that discharges the energy storage devices 11 using the cables 13a to balance voltages between the energy storage devices 11. On the substrate 200, components (not illustrated) are mounted to both the plate surface on the Y-axis positive direction side and the plate surface on the Y-axis negative direction side. The substrate 200 may monitor only the state of the energy storage device 11 without controlling the energy storage device 11.

More specifically, the substrate 200 includes connectors 210 and 220 and the through-hole 230. The connectors 210 and 220 are disposed at the end on the side different from the Z-axis negative direction side (the end on the axis on which the cover 120 described later rotates with respect to the substrate holder 110) in an outer peripheral portion of the substrate 200. In the embodiment, two connectors 210 are arranged in the X-axis direction on both sides in the X-axis direction at the end on the Z-axis positive direction side of the substrate 200, and two connectors 220 are arranged in the Z-axis direction on both sides in the Z-axis direction on the Z-axis negative direction side at the end on the X-axis negative direction side of the substrate 200.

The connector 210 is disposed on the plate surface on the Y-axis negative direction side of the substrate 200 while an insertion port is directed in the Z-axis positive direction (the direction parallel to the plate surface of the substrate 200), and the connector 13b is configured to be detachably attachable to the insertion port (see the part (a) of Fig. 7). The connector 220 is disposed on the plate surface on the Y-axis negative direction side of the substrate 200 while the insertion port is directed in the Y-axis negative direction, and an external connector (not illustrated) is configured to be detachably attachable to the insertion port through an opening 124 of the cover 120 (see the part (a) of Fig. 5 and the part (a) of Fig. 7). The opening 124 is a rectangular through-hole made at a position corresponding to the connector 220 on the Z-axis negative direction side at the end on the X-axis negative direction side of the cover 120.

The through-hole 230 is a rectangular through-hole penetrating the substrate 200 in the Y-axis direction. In the embodiment, a plurality of (six) through-holes 230 are disposed in the outer peripheral portion of the substrate 200. That is, three through-holes 230 are arranged side by side in the X-axis direction at the end on the Z-axis positive direction side of the substrate 200, and three through-holes 230 are arranged side by side in the X-axis direction at the end on the Z-axis negative direction side of substrate 200. Specifically, as illustrated in the part (b) of Fig. 7, the through-hole 230 is made such that a length in the X-axis direction is longer than that in the Z-axis direction, and the fixing unit 116 of the substrate holder 110 is inserted (press-fitted). A configuration in which the fixing unit 116 is inserted (press-fitted) into the through-hole 230 will be described in detail later.

### [2.2 Description of substrate holder 110 and cover 120]

The substrate holder 110 is a box-shaped member that is disposed between the energy storage unit 10 and the substrate 200, holds the substrate 200, and is opened in the Y-axis negative direction and the Z-axis positive direction. As described above, the substrate holder 110 is rotatably attached to the substrate unit attaching unit 16 of the outer case support 15 of the energy storage unit 10 in the erected posture. The substrate holder 110 includes a holder body 111, a gripping unit 115 having a first substrate-side attaching unit 112, a first holder-side attaching unit 113, an upper-side attaching unit 114, and the fixing unit 116.

The cover 120 is a member that is disposed in the Y-axis negative direction (one side in the first direction) of the substrate 200 to take a role of the lid closing the opening of the substrate holder 110, and openably attached to the substrate holder 110. The cover 120 takes a role of a cover that protects the substrate 200 from dust or mechanical or electrical damage together with the substrate holder 110. The cover 120 takes a role of a cover of an access surface during work such as maintenance of the substrate 200. The cover 120 takes a role of a cover of a surface on which electrical measurement work is performed during work such as insertion and removal work of the connectors 210 and 220 on the substrate 200 or maintenance. Specifically, the cover 120 is rotatably attached to the substrate holder 110. In addition to the opening 124 described above, the cover 120 includes a cover body 121, a first cover-side attaching unit 122, a second cover-side attaching unit 123, a cable disposing unit 125, and a substrate regulating unit 126 (see Figs. 6 and 7, and the like).

### [2.2.1 Description of holder body 111 and cover body 121]

The holder body 111 is a member constituting the body of the substrate holder 110, and includes a first holder wall 111a and a second holder wall 111b. The first holder wall 111a is a flat plate-like and rectangular member that is disposed between the substrate unit attaching unit 16 and the substrate 200 and in parallel to an XZ-plane. The second holder wall 111b is a flat plate-shaped and rectangular portion that protrudes in the Y-axis negative direction from an outer peripheral edge of the first holder wall 111a and surrounds the periphery of the substrate 200. In the embodiment, the second holder wall 111b is disposed so as to surround both sides in the X-axis direction of the substrate 200, a part on the Z-axis negative direction side, and a part on the Z-axis positive direction side.

The cover body 121 is a member constituting the body of the cover 120, and includes the first cover wall 121a and the second cover wall 121b. The first cover wall 121a is a flat plate-like rectangular member parallel to the XZ-plane, and is disposed at the position where the substrate 200 is sandwiched between the first cover wall 121a and the first holder wall 111a of the holder body 111. The second cover wall 121b is a flat plate-shaped and substantially rectangular member that protrudes in the Y-axis positive direction from the outer peripheral edge of the first cover wall 121a and surrounds the periphery of the substrate 200 and the periphery of the second holder wall 111b. In the embodiment, the second cover wall 121b is disposed so as to surround both sides in the X-axis direction and the Z-axis positive direction side of the substrate 200 and the second holder wall 111b.

### [2.2.2 Description of first substrate-side attaching unit 112]

The first substrate-side attaching unit 112 is a member that is disposed on the side of the bottom 15a of the energy storage apparatus 1 (in the Z-axis negative direction side) in the substrate holder 110 and is rotatably attached to the energy storage unit 10. Specifically, two first substrate-side attaching units 112 are disposed in the Z-axis negative direction side of the substrate holder 110 and at both ends in the X-axis direction. The substrate unit attaching unit 16 of the energy storage unit 10 includes a first energy storage-side attaching unit 16a to which the first substrate-side attaching unit 112 is attached. That is, two first energy storage-side attaching units 16a are disposed at positions corresponding to two first substrate-side attaching units 112 in the Z-axis negative direction side of the substrate unit attaching unit 16 and at both ends in the X-axis direction.

Specifically, as illustrated in the parts (a) and (b) of Fig. 5, the first substrate-side attaching unit 112 is a columnar shaft body extending in the X-axis direction and having a circular or cross (+ shape, X-shape) sectional shape when cutting along a YZ-plane. The first energy storage-side attaching unit 16a is a member that extends in the Z-axis positive direction from the end in the Y-axis negative direction side of the bottom 15a of the outer case support 15, is bent in the Y-axis negative direction, and is bent in the Z-axis negative direction. That is, the first energy storage-side attaching unit 16a has a shape in which the surface in the Z-axis positive direction side protrudes in the Z-axis positive direction and the surface in the Z-axis negative direction side is recessed in the Z-axis positive direction. In other words, the first energy storage-side attaching unit 16a has an inverted U shape when viewed from the X axis direction, the member in the Z-axis negative direction side of the first energy storage-side attaching unit 16a being opened and recessed in the Z-axis positive direction.

The first substrate-side attaching unit 112 is inserted and disposed in the recessed portion of the first energy storage-side attaching unit 16a. In other words, the first energy storage-side attaching unit 16a is disposed on both sides in the Y-axis direction of the first substrate-side attaching unit 112 and the Z-axis positive direction side so as to surround both sides in the Y-axis direction of the first substrate-side attaching unit 112 and the Z-axis positive direction side. Thus, the first substrate-side attaching unit 112 is disposed on the side (the Z-axis negative direction side) of the bottom 15a of the energy storage apparatus 1 with respect to the first energy storage-side attaching unit 16a.

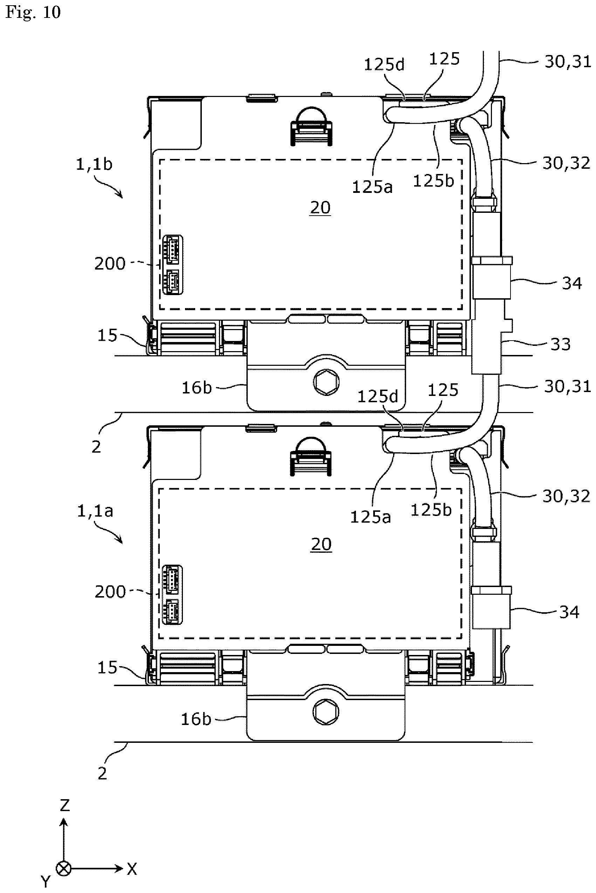

As illustrated in Fig. 8, the first substrate-side attaching unit 112 is configured to be rotatable with respect to the first energy storage-side attaching unit 16a. That is, when the first substrate-side attaching unit 112 rotates with respect to the first energy storage-side attaching unit 16a, the substrate holder 110 rotates with respect to the substrate unit attaching unit 16 about the first substrate-side attaching unit 112. An inclined surface 115a of the gripping unit 115 described later abuts on a wall 16b provided in the lower portion of the substrate unit attaching unit 16, whereby the rotation of the substrate holder 110 with respect to the substrate unit attaching unit 16 is regulated while the substrate holder 110 is inclined with respect to the substrate unit attaching unit 16. The wall 16b is a flat plate-like, rectangular member extending in the Z axis negative direction from between the two first energy storage-side attaching units 16a at the end on the Y-axis negative direction side of the bottom 15a of the outer case support 15, and is used for attaching the energy storage apparatus 1 on the shelf board 2 (see Fig. 10) of the rack (member accommodating the plurality of energy storage apparatuses 1) or the like.

Thus, the rotation of the substrate holder 110 is regulated while the substrate holder 110 is rotated by about 45° with respect to the substrate unit attaching unit 16, and in this state, the substrate holder 110 can be removed from the substrate unit attaching unit 16. Specifically, while the substrate holder 110 is rotated with respect to the substrate unit attaching unit 16, a second substrate-side attaching unit 114a of the upper-side attaching unit 114 described later is removed from a second energy storage-side attaching unit 16c of the substrate unit attaching unit 16 described later. The substrate holder 110 is moved in the Z-axis negative direction after rotating the substrate holder 110 about 45° with respect to the substrate unit attaching unit 16, so that the substrate holder 110 can be removed from the substrate unit attaching unit 16.

When the substrate holder 110 is attached to the substrate unit attaching unit 16, the first substrate-side attaching unit 112 is inserted in and attached to the first energy storage-side attaching unit 16a from the Z-axis negative direction while the substrate holder 110 is inclined at about 45° with respect to the substrate unit attaching unit 16. The substrate holder 110 is rotated so as to approach the substrate unit attaching unit 16, and the second substrate-side attaching unit 114a of the upper-side attaching unit 114 is attached to the second energy storage-side attaching unit 16c of the substrate unit attaching unit 16. In this way, the attachment and detachment of the substrate holder 110 to and from the energy storage unit 10 (the attachment and detachment of the substrate unit 20) can be performed. An angle at which the substrate holder 110 is regulated with respect to the substrate unit attaching unit 16 is not limited to 45°, but may be any angle as long as the substrate holder 110 can be detachably attached to the substrate unit attaching unit 16.

### [2.2.3 Description of first holder-side attaching unit 113 and first cover-side attaching unit 122]

The first holder-side attaching unit 113 is a member that is disposed on the side (Z-axis negative direction side) of the bottom 15a of the energy storage apparatus 1 in the substrate holder 110 and to which the cover 120 is attached. Specifically, two first holder-side attaching units 113 are disposed on the Z-axis negative direction side of the substrate holder 110 and outside the first substrate-side attaching units 112 at both ends in the X-axis direction. The first cover-side attaching unit 122 of the cover 120 is attached to the first holder-side attaching unit 113.

The first cover-side attaching unit 122 is a member that is disposed on the side (Z-axis negative direction side) of the bottom 15a of the energy storage apparatus 1 in the cover 120 and rotatably attached to the substrate holder 110. Specifically, the two first cover-side attaching units 122 are disposed at positions corresponding to the two first holder-side attaching units 113 on the Z-axis negative direction side of the cover 120 and at both ends in the X-axis direction. That is, the first cover-side attaching unit 122 is disposed at the end on the Z-axis negative direction side of the side wall on both sides in the X-axis direction of the second cover wall 121b.

Specifically, as illustrated in the parts (a) and (c) of Fig. 5 and the like, the first holder-side attaching unit 113 is a columnar shaft body having a circular shape as viewed in the X-axis direction and extending in the X-axis direction. The first cover-side attaching unit 122 has an inverted C-shape when viewed from the X-axis direction, a member on the Y-axis negative direction side of the first cover-side attaching unit 122 being opened and recessed in the Y-axis positive direction. The first holder-side attaching unit 113 is inserted and disposed in the recessed portion of the first cover-side attaching unit 122. In other words, the first cover-side attaching unit 122 is disposed on both sides in the Z-axis direction of the first holder-side attaching unit 113 and on the Y-axis positive direction side so as to surround both sides in the Z-axis direction of the first holder-side attaching unit 113 and on the Y-axis positive direction side. Thus, the first cover-side attaching unit 122 is disposed on the direction (Y-axis positive direction) side from the cover 120 toward the substrate holder 110 with respect to the first holder-side attaching unit 113.

As illustrated in the parts (a) and (c) of Fig. 7, the first cover-side attaching unit 122 is configured to be rotatable with respect to the first holder-side attaching unit 113. That is, when the first cover-side attaching unit 122 rotates with respect to the first holder-side attaching unit 113, the cover 120 rotates with respect to the substrate holder 110 about the first holder-side attaching unit 113. A rotation regulating unit 127 (see the part (c) of Fig. 7) provided near the first cover-side attaching unit 122 abuts on the substrate holder 110, whereby the rotation of the cover 120 with respect to the substrate holder 110 is regulated. That is, the rotation regulating unit 127 is a planar member disposed on the lower end surface of the first cover wall 121a of the cover body 121, and restricts the rotation of the cover 120 with respect to the substrate holder 110 by abutting on the surface on the Y-axis negative direction side of the lower portion (the gripping unit 115 and the like) of the substrate holder 110.

Thus, in the embodiment, the rotation of the cover 120 is regulated while the cover 120 is rotated by 90° with respect to the substrate holder 110, and in this state, the substrate 200 can be detachably attached to the substrate holder 110. Specifically, the second cover-side attaching unit 123 described later is removed from a second holder-side attaching unit 114b of the upper-side attaching unit 114 while the cover 120 is rotated with respect to the substrate holder 110. After the cover 120 is rotated by about 90° with respect to the substrate holder 110, the substrate 200 can be detachably attached to the substrate holder 110. Thus, the substrate 200 can be detachably attached to the substrate holder 110 without detaching the cover 120 from the substrate holder 110.

In this state, the cover 120 can be removed from the substrate holder 110 by moving the cover 120 in the Z-axis positive direction. When the cover 120 is removed from the substrate holder 110, the first holder-side attaching unit 113 is inserted into the first cover-side attaching unit 122 from the Z-axis negative direction while the cover 120 is orthogonal to the substrate holder 110, so that the cover 120 can be attached to the substrate holder 110. When the cover 120 is rotated so as to approach the substrate holder 110, the second cover-side attaching unit 123 can be attached to the second holder-side attaching unit 114b. In this way, the cover 120 can also be detachably attached to the substrate holder 110. The angle at which the cover 120 is regulated with respect to the substrate holder 110 is not limited to 90°, but may be any angle such as 90°±10° as long as the cover 120 can be detachably attached to the substrate holder 110. The substrate 200 is easily replaced when the angle is larger than 90°, and the fall of the substrate 200 can be prevented when the angle is smaller than 90°.

### [2.2.4 Description of upper-side attaching unit 114 and second cover-side attaching unit 123]

The upper-side attaching unit 114 is a member that is disposed at a central portion in the X-axis direction of the Z-axis positive direction side (an opposite side to the bottom 15a) in the substrate holder 110 and is engageably attached to the energy storage unit 10 and the cover 120. Specifically, the upper-side attaching unit 114 includes the second substrate-side attaching unit 114a that is attached to the energy storage unit 10 by engaging with the energy storage unit 10 and the second holder-side attaching unit 114b that is attached to the cover 120 by engaging with the cover 120.

As illustrated in Fig. 6 and the like, the second substrate-side attaching unit 114a is a protrusion that is disposed on the Z-axis negative direction side of the upper-side attaching unit 114 to protrude in the Z-axis negative direction. The substrate unit attaching unit 16 of the energy storage unit 10 includes the second energy storage-side attaching unit 16c to which the second substrate-side attaching unit 114a is attached at the position corresponding to the second substrate-side attaching unit 114a at the central portion in the X-axis direction of the Z-axis positive direction side. A rectangular opening 16d is formed in the second energy storage-side attaching unit 16c. The second substrate-side attaching unit 114a is inserted into the opening 16d from the Z-axis positive direction, and engages with an end edge on the Y-axis negative direction side of the opening 16d, thereby engaging with the second energy storage-side attaching unit 16c. Thus, the substrate holder 110 and the energy storage unit 10 engages with each other on the Z-axis positive direction side.

The second holder-side attaching unit 114b is a protrusion that is disposed on the Z-axis positive direction side of the upper-side attaching unit 114 and protrudes in the Z-axis negative direction, and the second cover-side attaching unit 123 of the cover 120 is attached to the second holder-side attaching unit 114b. The second cover-side attaching unit 123 is a member that is disposed at the central portion in the X-axis direction of the Z-axis positive direction side (the opposite side to the bottom 15a) of the cover 120, and has a protrusion 123a protruding in the Z-axis positive direction. The protrusion 123a is disposed on the Y-axis positive direction side of the second holder-side attaching unit 114b and engages with the second holder-side attaching unit 114b in the Y-axis direction, whereby the cover 120 and the substrate holder 110 engage with each other on the Z-axis positive direction side. In this way, the second cover-side attaching unit 123 is a member that is attached to the substrate holder 110 by engaging with the substrate holder 110.

### [2.2.5 Description of gripping unit 115]

The gripping unit 115 is a handle that is disposed at the central portion in the X-axis direction on the side (Z-axis negative direction side) of the bottom 15a of the energy storage apparatus 1 in the substrate holder 110 to grip the energy storage apparatus 1. Specifically, the gripping unit 115 is a member that has the above-described first substrate-side attaching units 112 at both ends and is long in the X-axis direction. That is, as described above, at least a part (first substrate-side attaching unit 112) of the gripping unit 115 is disposed at the position on the side of the bottom 15a of the energy storage apparatus 1 with respect to at least a part (first energy storage-side attaching unit 16a) of the energy storage unit 10. In the embodiment, the gripping unit 115 is formed integrally with the substrate holder 110.

In this way, the gripping unit 115 functions as a handle on the Y-axis negative direction side of the energy storage apparatus 1. On the Y-axis positive direction side of the energy storage apparatus 1, the member in which the connection unit 15c of the outer case support 15 of the energy storage unit 10 and the connection unit 17c of the outer case lid 17 are connected to each other functions as the handle (second gripping unit) (see Fig. 2). The definition of the second gripping unit is not particularly limited, but not both the connection unit 15c and the connection unit 17c but only the connection unit 15c may be referred to as the second gripping unit, the connection unit 15c or the central portion in the X-axis direction of the connection unit 15c and the connection unit 17c may be referred to as the second gripping unit, or the other portion may be referred to as the second gripping unit. The second gripping unit is formed such that the sheet metal is folded downward and does not become an edge when gripped by the operator. The member in which the connection unit 15b of the outer case support 15 and the connection unit 17b of the outer case lid 17 are connected to each other is covered with the cover 120.

The gripping unit 115 includes the inclined surface 115a that is inclined in the direction (Y-axis negative direction) opposite to the energy storage unit 10 toward the bottom 15a of the energy storage apparatus 1 (toward the Z-axis negative direction) on the surface on the side (Y-axis positive direction side) of the energy storage unit 10. That is, the surface in the Y-axis negative direction of the gripping unit 115 is parallel to the XZ-plane, whereas the surface in the Y-axis positive direction of the gripping unit 115 is inclined from the XZ-plane. An inclination angle of the inclined surface 115a is not particularly limited, but is preferably inclined at an angle at which the fingers of the hand of the operator can be inserted (or are easily inserted) on the Y-axis positive direction side of the gripping unit 115 such that gripping unit 115 can be gripped (or is easily gripped). In the embodiment, the inclined surface 115a is inclined at about 45° with respect to the vertical direction.

In the gripping unit 115, a gripping unit recess 115b recessed in the direction (Y-axis negative direction) opposite to the energy storage unit 10 is formed on the surface on the side (Y-axis positive direction) of the energy storage unit 10 (see Fig. 6). That is, the gripping unit recess 115b is a recess formed such that the inclined surface 115a of the gripping unit 115 is recessed in the Y-axis negative direction. In the embodiment, two gripping unit recesses 115b arranged in the X-axis direction are formed on the inclined surface 115a of the gripping unit 115. It can also be said that the inclined surface 115a is formed between the two gripping unit recesses 115b and on both sides in the X-axis direction of the two gripping unit recesses 115b. In other words, the wall is disposed between the two gripping unit recesses 115b and on both sides in the X-axis direction of the two gripping unit recesses 115b (the edge portion of the gripping unit 115), and the inclined surface 115a is formed on the wall. A size, a shape, and the number of gripping unit recesses 115b are not particularly limited, but are preferably a size, a shape, and the number of gripping unit recesses in which the fingers of the hand of the operator can be inserted (or are easily inserted) such that the gripping unit 115 can be gripped (or is easily gripped).

A distal end in the Z-axis negative direction of the gripping unit 115 protrudes toward the front (Y-axis negative direction), and the distal end has an R shape, so that the edge of the gripping unit 115 can be prevented from biting into the hand of the operator when the operator grips the gripping unit 115.

### [2.2.6 Description of fixing unit 116 and substrate regulating unit 126]

The fixing unit 116 is a member that fixes the substrate 200 in the posture in which the plate surface of the substrate 200 is directed in the direction intersecting the vertical direction (Z-axis direction). In the embodiment, the substrate 200 is fixed in the posture in which the plate surface of the substrate 200 is directed in the horizontal direction (Y-axis direction). Specifically, the fixing unit 116 is a protrusion that protrudes in the Y-axis negative direction from the opposing surface of the substrate 200 of the substrate holder 110 (the surface on the Y-axis negative direction side of the first holder wall 111a of the holder body 111), and fixes the substrate 200 in the press-fitted state. The fixing unit 116 fixes the substrate 200 in a non-conductive state without being conductive to the substrate 200.

In the embodiment, a plurality of (six) fixing units 116 are disposed on the outer peripheral portion of the first holder wall 111a. That is, three fixing units 116 are arranged side by side in the X-axis direction at the end on the Z-axis positive direction side of the first holder wall 111a, and three fixing units 116 are arranged side by side in the X-axis direction at the end on the Z-axis negative direction side of the first holder wall 111a. That is, the fixing unit 116 is disposed at the position corresponding to the through-hole 230 made in the substrate 200.

Specifically, as illustrated in Fig. 6, the part (b) of Fig. 7, and the like, the fixing unit 116 is a protrusion that becomes thinner toward the tip portion, and fixes the substrate 200 while being inserted and press-fitted into the through-hole 230 of the substrate 200. That is, the fixing unit 116 has a tapered shape in which a width in the X-axis direction and the Z-axis direction decreases toward the Y-axis negative direction. The fixing unit 116 has a cross shape (+ shape) when viewed in the Y-axis direction, and abuts on the inner surface of the through-hole 230 in the Z-axis direction, is compressed, and is press-fitted into the through-hole 230. The fixing unit 116 is configured not to abut on the inner surface of the through-hole 230 in the X-axis direction so as to be insertable into the through-hole 230 even when the position of the fixing unit is shifted from the through-hole 230. The fixing unit 116 fixes the substrate 200 at the position separated from the opposing surface of the substrate 200 (the surface on the Y-axis negative direction side of the first holder wall 111a). That is, a space is formed between the substrate 200 and the first holder wall 111a.

The sizes and shapes of the fixing unit 116 and the through-hole 230 are not particularly limited as long as the fixing unit 116 can be inserted into the through-hole 230 in the press-fitted state. The fixing unit 116 and the through-hole 230 may have a circular shape, an elliptical shape, an oval shape, a triangular shape, other polygonal shapes, or the like when viewed from the Y-axis direction, and the fixing unit 116 may abut on the inner surface of the through-hole 230 and be compressed also in the X-axis direction. The number and the arrangement positions of the fixing units 116 and the through-holes 230 are also not particularly limited.

The substrate regulating unit 126 of the cover 120 is disposed on the Y-axis negative direction side of the substrate 200. The substrate regulating unit 126 is a protrusion that protrudes in the Y-axis positive direction from the surface on the Y-axis positive direction side of the first cover wall 121a of the cover body 121, and regulates the movement of the substrate 200 in the direction toward the cover 120 (Y-axis negative direction). When the substrate 200 tries to move in the Y-axis negative direction, the tip of the substrate regulating unit 126 abuts on the substrate 200, so that the movement in the Y-axis negative direction of the substrate 200 is regulated. That is, because the fixing unit 116 regulates the movement in the Y-axis positive direction of the substrate 200, the movement of the substrate 200 toward both sides in the Y-axis direction is regulated by the fixing unit 116 and the substrate regulating unit 126.

In the embodiment, a plurality of (four) cylindrically-shaped substrate regulating units 126 are disposed on the outer peripheral portion of the first cover wall 121a. That is, the substrate regulating unit 126 is disposed at the outer peripheral portion of the substrate 200 and at the position not overlapping the fixing unit 116 when viewed in the Y-axis direction. The size, shape, number, arrangement position, and the like of the substrate regulating unit 126 are not limited to the above.

### [2.2.7 Description of cable disposing unit 125]

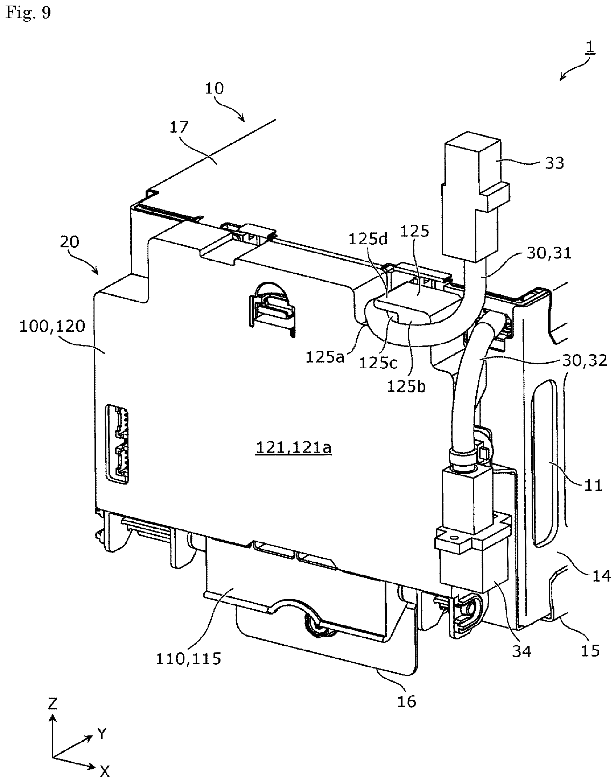

With reference to Figs. 9 and 10, the configuration of the cable disposing unit 125 of the cover 120 will be described below. Fig. 9 is a perspective view illustrating the configuration while the cable 30 is disposed in the cable disposing unit 125 of the substrate unit 20 of the embodiment. Specifically, Fig. 9 is the perspective view illustrating the end on the Y-axis negative direction side of the energy storage apparatus 1 in Fig. 1. Fig. 10 is a front view illustrating a connection configuration of the cable 30 in the energy storage apparatus 1 of the embodiment. Specifically, Fig. 10 illustrates the configuration of the state in which two energy storage apparatuses 1 are arranged in the Z-axis direction to connect the cables 30 is viewed from the Y-axis negative direction side.

The cable disposing unit 125 is a member that is disposed at the end on the X-axis positive direction side of the opposite side (Z-axis positive direction side) to the bottom 15a of the energy storage apparatus 1 in the cover 120 and in which the positive electrode power cable 31 of the cable 30 is disposed. As illustrated in Figs. 4, 5, 9, and the like, the cable disposing unit 125 includes a first recess 125a, an opening and closing regulating unit 125b, an inclined unit 125c, and a cable regulating unit 125d.

The first recess 125a is a recess in which the end on the X-axis positive direction side in the upper surface of the wall (also referred to as a third cover wall) on the Z-axis positive direction side of the cover 120 is recessed in the Z-axis negative direction (one side in the second direction intersecting the first direction). It can also be said that the first recess 125a is a recess in which the front surface (the surface in the Y-axis negative direction) of the first cover wall 121a is recessed. Specifically, the first recess 125a is a recess that is formed so as to penetrate the cover 120 in the Y-axis direction and extends in the Y-axis direction, and the positive electrode power cable 31 is disposed in the first recess 125a.

The opening and closing regulating unit 125b is a flat plate-shaped rectangular wall that is disposed in the X-axis positive direction of the first recess 125a and is parallel to the XZ-plane. That is, the opening and closing regulating unit 125b is a member extending in the Z-axis positive direction from the end on the Z-axis positive direction side of the first cover wall 121a and the X-axis positive direction side, or a part of the end on the Z-axis positive direction side of the first cover wall 121a and the X-axis positive direction side. The opening and closing regulating unit 125b regulates the opening and closing of the cover 120 with respect to the substrate holder 110 by disposing the positive electrode power cable 31 in the Y-axis negative direction. Specifically, the opening and closing regulating unit 125b regulates the rotation of the cover 120 with respect to the substrate holder 110. In this case, the opening and closing regulating unit 125b also regulates the rotation of the substrate holder 110 with respect to the substrate unit attaching unit 16.

The inclined unit 125c is a flat and rectangular wall that is disposed between the first recess 125a and the opening and closing regulating unit 125b and inclined with respect to the opening and closing regulating unit 125b. Specifically, the inclined unit 125c is disposed so as to be inclined toward the Y-axis negative direction near the X-axis positive direction. When the positive electrode power cable 31 disposed in the first recess 125a is disposed in the Y-axis negative direction of the opening and closing regulating unit 125b, the positive electrode power cable 31 is also disposed in the Y-axis negative direction of the inclined unit 125c.

The cable regulating unit 125d is a flat plate-shaped wall parallel to the XY-plane, the wall being disposed between the first recess 125a and the opening and closing regulating unit 125b and in the Z-axis positive direction of the inclined unit 125c. That is, the cable regulating unit 125d is disposed so as to protrude in the X-axis negative direction and the Y-axis negative direction in the Z-axis positive direction (upper side) of the space of first recess 125a. When the positive electrode power cable 31 disposed in the first recess 125a is disposed in the Y-axis negative direction of the opening and closing regulating unit 125b, the positive electrode power cable 31 is disposed in the Z-axis negative direction of the cable regulating unit 125d. Thus, the cable regulating unit 125d regulates the movement of the positive electrode power cable 31 in the Z-axis positive direction (the other side in the second direction intersecting the first direction). The positive electrode power cable 31 is disposed in the Z-axis negative direction (one side in the second direction) of the cable regulating unit 125d, so that the cable regulating unit 125d regulates the movement in the Z-axis positive direction (the other side in the second direction) of the positive electrode power cable 31.

In the configuration as described above, as illustrated in Fig. 10, the plurality of energy storage apparatuses 1 are attached to a shelf board 2 of the rack, and the positive electrode power cable 31 of one energy storage apparatus 1 (for example, an energy storage apparatus 1a) is connected to the negative electrode power cable 32 of another energy storage apparatus 1 (for example, an energy storage apparatus 1b). Specifically, in the two energy storage apparatuses 1a and 1b arranged in the Z-axis direction, a connector 33 connected to the positive electrode power cable 31 of the energy storage apparatus 1a is connected to a connector 34 connected to the negative electrode power cable 32 of the energy storage apparatus 1b.

In this case, the length and the like of the positive electrode power cable 31 of the energy storage apparatus 1a are adjusted such that the positive electrode power cable 31 cannot be connected to the negative electrode power cable 32 of the energy storage apparatus 1b unless the positive electrode power cable 31 passes through the Y-axis negative direction of the opening and closing regulating unit 125b. That is, one end of the positive electrode power cable 31 is electrically connected to the energy storage unit 10 of one energy storage apparatus 1, and the other end is connected to an external conductive member (the negative electrode power cable 32 of another energy storage apparatus 1) of the one energy storage apparatus 1. The opening and closing regulating unit 125b is disposed in the Y-axis positive direction of the positive electrode power cable 31 while the positive electrode power cable 31 is connected to the external conductive member.

As described above, the cover 120 is configured such that at least a part (opening and closing regulating unit 125b) of the cover 120 is disposed in the Y-axis positive direction (the other side in the first direction) of the positive electrode power cable 31 while the positive electrode power cable 31 is connected to the external conductive member. That is, the positive electrode power cable 31 protrudes from the energy storage unit 10, extends in the Y-axis negative direction (one side in the first direction), and is disposed in the first recess 125a. The positive electrode power cable 31 is disposed in the Y-axis negative direction (one side in the first direction) of at least a part (the inclined unit 125c and the opening and closing regulating unit 125b) of the cover 120, and is connected to the external conductive member. As a result, the opening and closing (rotation) of the cover 120 with respect to the substrate holder 110 is regulated, and the movement of the positive electrode power cable 31 in the Z-axis positive direction is also regulated by the cable regulating unit 125d.

### [3 Description of effects]

As described above, according to the energy storage apparatus 1 of the embodiment of the present invention, the positive electrode power cable 31 is disposed in the Y-axis negative direction (one side in the first direction) at least a part of the cover 120 while connected to the external conductive member of the energy storage apparatus 1. In this way, the cover 120 is disposed outside the substrate 200, and the positive electrode power cable 31 is disposed outside (Y-axis negative direction) at least a part (opening and closing regulating unit 125b) of the cover 120 while the positive electrode power cable 31 is connected to the external conductive member (the negative electrode power cable 32 of the adjacent energy storage apparatus 1 or the like). Thus, because the positive electrode power cable 31 exists in the middle of the operation path in which the cover 120 rotates, the positive electrode power cable 31 becomes an obstacle in opening the cover 120, and the cover 120 cannot be opened. That is, the cover 120 cannot be opened unless the positive electrode power cable 31 is detached from an external conductive member (in the above embodiment, the connector 34 of the negative electrode power cable 32 of another energy storage apparatus 1) to move the positive electrode power cable 31, so that the work on the substrate 200 cannot be performed. Consequently, the positive electrode power cable 31 of the energy storage apparatus 1 and the external conductive member are disconnected from each other before the work on the substrate 200 is performed, so that the safety can be improved. That is, when a plurality of energy storage apparatuses 1 in which a plurality of energy storage devices 11 are connected in series are connected in series to constitute an energy storage facility, a total voltage of the energy storage facility becomes a high voltage of, for example, several hundred to several thousand volts. When the work such as the maintenance is performed under the high voltage, the power supply cable is reliably removed, so that the safety can be improved.

In the energy storage apparatus 1, the positive electrode power cable 31 protrudes from the energy storage unit 10 to extend in the Y-axis negative direction, so that the positive electrode power cable 31 crosses the cover 120 in the Y-axis negative direction, is disposed in the Y-axis negative direction of at least a part of the cover 120, and is connected to the external conductive member. In this way, the positive electrode power cable 31 is disposed so as to wind (hold) at least a part of the cover 120. Thus, the opening of the cover 120 can be prevented while the positive electrode power cable 31 is connected to the external conductive member, so that safety can be improved.

The positive electrode power cable 31 can be positioned with respect to the cover 120 by disposing the positive electrode power cable 31 in the first recess 125a recessed in the Z-axis negative direction (one side in the second direction) of the cover 120. For this reason, the positive electrode power cable 31 can be stably disposed in the Y-axis negative direction of at least a part of the cover 120. Thus, the opening of the cover 120 can be prevented while the positive electrode power cable 31 is connected to the external conductive member, so that safety can be improved.

The cable regulating unit 125d of the cover 120 regulates the movement in the Z-axis positive direction (the other side in the second direction) of the positive electrode power cable 31, so that the positive electrode power cable 31 can be prevented from moving from the Y-axis negative direction of the cover 120. Thus, the opening of the cover 120 can be prevented while the positive electrode power cable 31 is connected to the external conductive member, so that safety can be improved.

Because the cover 120 is rotatably attached to the substrate holder 110, the cover 120 is required to be rotated with respect to the substrate holder 110 in order to open the cover 120 to detach the substrate 200. However, the cover 120 cannot be rotated when at least a part of the cover 120 is disposed in the Y-axis positive direction of the positive electrode power cable 31. Thus, the cover 120 cannot be opened unless the positive electrode power cable 31 is detached from the external conductive member to move the positive electrode power cable 31, so that the safety can be improved.

The energy storage apparatus 1 includes the energy storage unit 10 that includes the energy storage device 11 and the substrate unit 20 that includes the substrate 200 and the substrate accommodating unit 100, the substrate unit 20 being attached to the energy storage unit 10, and the substrate accommodating unit 100 of the substrate unit 20 includes the gripping unit 115 that grips the energy storage apparatus 1. As described above, when the gripping unit 115 is provided in the substrate accommodating unit 100 of the substrate unit 20, there is no possibility that the substrate unit 20 becomes an obstacle and the energy storage apparatus 1 cannot be gripped or no possibility that a complicated structure is formed so as to grip the energy storage apparatus 1 while avoiding the substrate unit 20. Thus, the energy storage apparatus 1 can be easily gripped using the gripping unit 115, so that the energy storage apparatus 1 can be easily moved (lifting, pulling out, and the like). As illustrated in Fig. 10, the work of lifting the energy storage apparatus 1 in order to carry the energy storage apparatus 1 to the shelf board 2 of the rack, and the work of pushing or pulling out the energy storage apparatus 1 after the energy storage apparatus 1 is placed on the shelf board 2 can be easily performed.

In the energy storage apparatus 1, when the gripping unit can be formed on the outer case support 15 by sheet metal working, the gripping unit can be easily formed. However, the wall 16b is provided in the outer case support 15 in order to attach the energy storage apparatus 1 to the shelf board 2 of the rack or the like. For this reason, the gripping unit cannot be easily provided on the outer case support 15, but the gripping unit of another member or the like is required to be attached. Thus, by providing the gripping unit 115 in the substrate accommodating unit 100 of the substrate unit 20, the number of components does not increase, and the gripping unit 115 can be easily configured.

In the substrate unit 20, the substrate 200 is fixed to the substrate holder 110 by press fitting. Thus, even when the substrate unit 20 is slightly deformed by gripping the gripping unit 115, the substrate 200 can move with respect to the substrate holder 110, so that damage such as deformation of the substrate 200 can be prevented.

The substrate unit 20 is attached to the end in the longitudinal direction (Y-axis direction) of the energy storage unit 10, so that the gripping unit 115 is also attached to the end in the longitudinal direction of the energy storage unit 10. Thus, the energy storage apparatus 1 that is a heavy load can be gripped in the longitudinal direction, so that the energy storage apparatus 1 can be stably gripped and easily moved.

At least a part (first substrate-side attaching unit 112) of the gripping unit 115 of the substrate unit 20 is disposed on the side of the bottom 15a of the energy storage apparatus 1 with respect to at least a part (first energy storage-side attaching unit 16a) of the energy storage unit 10. Thus, when the energy storage apparatus 1 is lifted with the gripping unit 115 held, the movement of the gripping unit 115 with respect to the energy storage unit 10 is regulated. When the movement of the gripping unit 115 with respect to the energy storage unit 10 is regulated, the detachment of the substrate unit 20 from the energy storage unit 10 is prevented. As described above, when the energy storage apparatus 1 is moved with the gripping unit 115 held, the substrate unit 20 can be prevented from being detached from the energy storage unit 10, so that the energy storage apparatus 1 can be easily moved.

Because the substrate unit 20 is connected to the energy storage unit 10 at the side of the bottom 15a, a fulcrum of acting force is located on the side of the bottom 15a of the substrate unit 20, namely, at the position away from the substrate 200 when the gripping unit 115 is gripped to move the energy storage apparatus 1. In this case, a force point is set to the position in the Z-axis negative direction (downward) with respect to the fulcrum, so that an action point becomes the position in the Z-axis positive direction (upward) with respect to the fulcrum. The position of the first substrate-side attaching unit 112 (the position of the first energy storage-side attaching unit 16a) is the fulcrum, and the position of the antinode of the fingertip inserted into the gripping unit recess 115b by the operator is the force point.

It is assumed that the energy storage apparatus 1 is moved by being pulled toward the front side (Y-axis negative direction) by replacement of the energy storage apparatus 1 or the like. In this case, the operator moves the energy storage apparatus 1 by inserting the finger into the gripping unit recess 115b of the gripping unit 115 of the substrate unit 20 and pulling the finger toward the front side. At this point, when the position (force point) of the finger is disposed in the Z-axis negative direction with respect to the position (fulcrum) of the first substrate-side attaching unit 112, the upper side of the substrate unit 20 becomes the action point, and the action is made in the direction (Y-axis positive direction) in which the energy storage unit 10 is pushed. When the position (force point) of the finger is located above the position (fulcrum) of the first substrate-side attaching unit 112, the substrate unit 20 turns to come off from the energy storage unit 10 as illustrated in Fig. 8. On the other hand, when the position (force point) of the finger is located below the position (fulcrum) of the first substrate-side attaching unit 112, the substrate unit 20 presses the energy storage unit 10, so that the substrate unit 20 is prevented from coming off from the energy storage unit 10.

In order to dispose the position (force point) of the finger below the position (fulcrum) of the first substrate-side attaching unit 112, the gripping unit recess 115b is preferably recessed only to a relatively low position in the Z-axis direction. In the embodiment, the gripping unit recess 115b is recessed to the position slightly higher than the first substrate-side attaching unit 112, but may be recessed only to the same height as the position of the first substrate-side attaching unit 112 or to the position lower than the position of the first substrate-side attaching unit 112.

Because the gripping unit recess 115b is formed on the surface on the side of the energy storage unit 10 of the gripping unit 115 of the substrate unit 20, the finger of the hand of the operator or the like can be easily inserted between the gripping unit 115 and the energy storage unit 10, so that the gripping unit 115 can be easily gripped. Thus, the energy storage apparatus 1 can be easily gripped, so that the energy storage apparatus 1 can be easily moved.

Because the inclined surface 115a is formed on the surface on the side of the energy storage unit 10 of the gripping unit 115 of the substrate unit 20, the finger of the hand of the operator or the like can be easily inserted between the gripping unit 115 and the energy storage unit 10, so that the gripping unit 115 can be easily gripped. Thus, the energy storage apparatus 1 can be easily gripped, so that the energy storage apparatus 1 can be easily moved.

The energy storage apparatus 1 includes the energy storage unit 10 that includes the energy storage devices 11 and the substrate unit 20 that includes the substrate 200 and the substrate accommodating unit 100, the substrate unit 20 being attached to the energy storage unit 10. In the substrate accommodating unit 100, the cover 120 includes the first cover-side attaching unit 122 rotatably attached to the substrate holder 110. As described above, because the cover 120 is rotatably attached to the substrate holder 110, the cover 120 can be easily rotated with respect to the substrate holder 110, so that the cover 120 can be easily opened and closed with respect to the substrate 200. Thus, the substrate 200 can be easily accessed, so that the work such as maintenance of the substrate 200 (installation, repair, replacement, or the like of the substrate 200) can be easily performed. This is extremely effective in assembling work, maintenance work, and the like when the number of energy storage apparatuses 1 is large. The same applies to the following.

When the first cover-side attaching unit 122 of the cover 120 is disposed on the opposite side (upper side) to the side of the bottom 15a of the energy storage apparatus 1, the cover 120 is required to be lifted when the cover 120 is rotated with respect to the substrate holder 110, and sometimes the work such as the maintenance of the substrate 200 is hardly performed. For this reason, the first cover-side attaching unit 122 is disposed on the side (lower side) of the bottom 15a of the energy storage apparatus 1 in the cover 120. Thus, the first cover-side attaching unit 122 is rotated on the side of the bottom 15a of the energy storage apparatus 1, so that the work such as the maintenance of the substrate 200 can be easily performed.

In the substrate accommodating unit 100, the first cover-side attaching unit 122 of the cover 120 is disposed on the direction side from the cover 120 toward the substrate holder 110 with respect to the first holder-side attaching unit 113 of the substrate holder 110. Thus, even when the cover 120 is about to come off from the substrate holder 110, the movement of the first cover-side attaching unit 122 is regulated by the first holder-side attaching unit 113, so that the cover 120 can be prevented from coming off from the substrate holder 110. When the first cover-side attaching unit 122 is rotated by 90° with respect to the first holder-side attaching unit 113, the first cover-side attaching unit 122 is disposed above the first holder-side attaching unit 113, so that the cover 120 can be prevented from falling from the substrate holder 110.

The cover 120 of the substrate accommodating unit 100 includes the second cover-side attaching unit 123 that engages with the substrate holder 110 in addition to the first cover-side attaching unit 122. Thus, the cover 120 can be attached to the substrate holder 110 by both the first cover-side attaching unit 122 and the second cover-side attaching unit 123, so that the cover 120 can be more firmly attached to the substrate holder 110.

In the substrate accommodating unit 100, because the cover 120 includes the rotation regulating unit 127 that regulates the rotation with respect to the substrate holder 110, the rotation of the cover 120 with respect to the substrate holder 110 is regulated. Thus, the cover 120 can be prevented from being excessively rotated to come into contact with another member or to fall from the substrate holder 110, so that the work such as the maintenance of the substrate 200 can be easily performed.

The energy storage apparatus 1 includes the energy storage unit 10 that includes the energy storage devices 11 and the substrate unit 20 that includes the substrate 200 and the substrate holder 110 and is attached to the energy storage unit 10, and the substrate holder 110 includes the first substrate-side attaching unit 112 rotatably attached to the energy storage unit 10. As described above, the substrate holder 110 of the substrate unit 20 is rotatably attached to the energy storage unit 10, so that the substrate unit 20 can be easily rotated with respect to the energy storage unit 10. Thus, the substrate unit 20 can be easily moved or detachably attached with respect to the energy storage unit 10, so that the work on the substrate 200 can be easily performed. This is extremely effective in assembling work, maintenance work, and the like when the number of energy storage apparatuses 1 is large. The same applies to the following.

When the first substrate-side attaching unit 112 of the substrate holder 110 is disposed on the opposite side (upper side) to the bottom 15a of the energy storage apparatus 1, the work of lifting the substrate unit 20 is required in rotating the substrate unit 20 with respect to the energy storage unit 10. For this reason, the first substrate-side attaching unit 112 is disposed on the side (lower side) of the bottom 15a of the energy storage apparatus 1 in the substrate holder 110. Thus, because the first substrate-side attaching unit 112 is rotated on the side of the bottom 15a of the energy storage apparatus 1, the substrate unit 20 can be easily moved or detachably attached with respect to the energy storage unit 10, and the work on the substrate 200 can be easily performed.

The first substrate-side attaching unit 112 is disposed on the side of the bottom 15a of the energy storage apparatus 1 with respect to the first energy storage-side attaching unit 16a of the energy storage unit 10, so that the movement of the first substrate-side attaching unit 112 with respect to the energy storage unit 10 is regulated when the substrate unit 20 is gripped to lift the energy storage apparatus 1. Thus, the first substrate-side attaching unit 112 can be prevented from moving with respect to the energy storage unit 10, and the substrate unit 20 can be prevented from coming off from the energy storage unit 10. The first substrate-side attaching unit 112 is moved (pulled out) from the first energy storage-side attaching unit 16a toward the side of the bottom 15a, so that the substrate unit 20 can be easily detached from the energy storage unit 10.

The substrate holder 110 includes the second substrate-side attaching unit 114a that engages with the energy storage unit 10 in addition to the first substrate-side attaching unit 112. Thus, the substrate unit 20 can be attached to the energy storage unit 10 by both the first substrate-side attaching unit 112 and the second substrate-side attaching unit 114a, so that the substrate unit 20 can be more firmly attached to the energy storage unit 10.

When the substrate unit 20 includes the cover 120 attached to the substrate holder 110, preferably the substrate 200 can be easily accessed in working on the substrate 200. For this reason, the first cover-side attaching unit 122 rotatably attached to the substrate holder 110 is provided in the cover 120. Thus, the substrate 200 can be easily accessed by rotating the cover 120 to be opened and closed with respect to the substrate holder 110, so that the work on the substrate 200 can be easily performed.

In the energy storage apparatus 1, the substrate holder 110 that holds the substrate 200 includes the fixing unit 116 that fixes the substrate 200 in the press-fitted state. As described above, when the substrate 200 is fixed to the substrate holder 110 by the press-fitting, the work of attaching or detaching a screw is not required, so that the substrate 200 can be easily detachably attached to the substrate holder 110. The member such as the screw is not required by fixing the substrate 200 to the substrate holder 110 by the press-fitting, so that the number of components can be reduced.

The fixing unit 116 of the substrate holder 110 is a protrusion that becomes thinner toward the tip portion, and fixes the substrate 200 at the position separated from the opposing surface of the substrate holder 110 while being press-fitted into the through-hole 230 of the substrate 200. In this way, the tapered protrusion is provided on the substrate holder 110 and press-fitted into the through-hole 230 of the substrate 200, so that the substrate 200 can be easily detachably attached to the substrate holder 110 with a simple configuration. The substrate 200 is fixed at the position separated from the opposing surface of the substrate holder 110, so that the component can also be disposed on the back surface (the surface on the opposing surface side) of the substrate 200.

When the substrate 200 is fixed by screwing or the like while the plate surface of the substrate 200 faces the direction intersecting the vertical direction, the substrate 200 is hardly detachably attached to the substrate holder 110. For this reason, the substrate 200 is fixed to the substrate holder 110 with the fixing unit 116 by the press-fitting, so that the substrate 200 can be easily detachably attached to the substrate holder 110 with a simple configuration. This is extremely effective in assembling work, maintenance work, and the like when the number of energy storage apparatuses 1 is large.

Because the substrate 200 is fixed to the fixing unit 116 of the substrate holder 110 by not the screwing but the press-fitting, there is a risk that the substrate 200 comes off from the fixing unit 116. For this reason, the substrate regulating unit 126 that regulates the movement toward the side of the cover 120 of the substrate 200 is provided in the cover 120 attached to the substrate holder 110. Thus, the substrate 200 fixed to the fixing unit 116 of the substrate holder 110 by the press-fitting can be prevented from coming off from the fixing unit 116.

The cover 120 is rotatably attached to the substrate holder 110, so that the cover 120 can be easily opened and closed with respect to the substrate holder 110 by rotating the cover 120 with respect to the substrate holder 110. Thus, even when the cover 120 is attached to the substrate holder 110, the substrate 200 can be easily detachably attached to the substrate holder 110.

The connectors 210 and 220 of the substrate 200 are disposed at the end on the side different from the side of the axis on which the cover 120 rotates with respect to the substrate holder 110 exists. For this reason, when the cover 120 is rotated, the connectors 210 and 220 or the cables connected to the connectors 210 and 220 can be prevented from becoming an obstacle. Thus, the cover 120 can be easily rotated, for example, the cover 120 can be rotated while the cable is attached to the connectors 210 and 220, so that the substrate 200 can be easily detachably attached to the substrate holder 110.

Because the connector 210 is disposed at the end on the Z-axis positive direction side of the substrate 200 and the insertion port faces the Z-axis positive direction (the direction parallel to the plate surface of the substrate 200), the connector 13b can be easily detachably attached, and the cable 13a is not disposed on the plate surface of the substrate 200. Thus, the substrate 200 can be easily detachably attached to the substrate holder 110.

### [4 Description of modification examples]

### (Modification example)

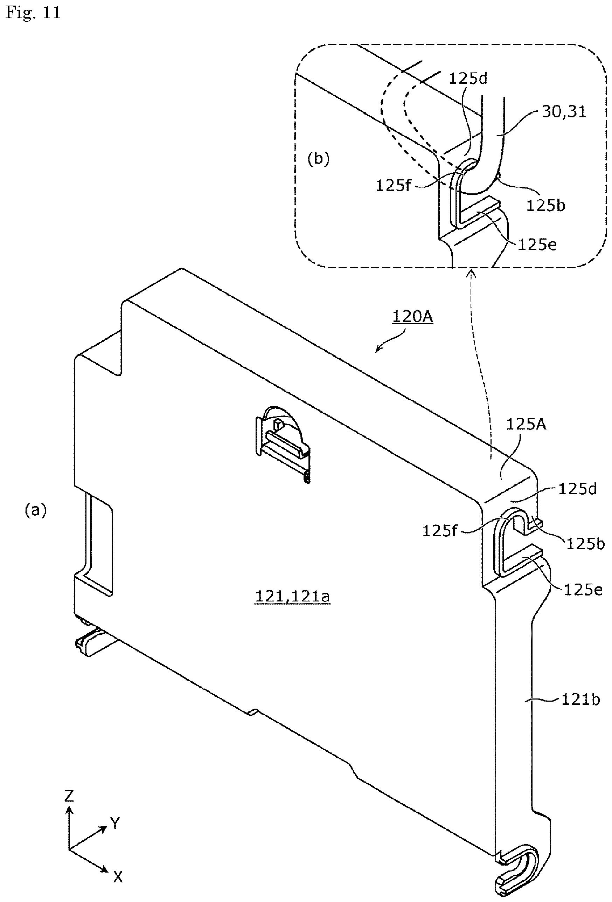

A modification example of the embodiment will be described below. Fig. 11 is a perspective view illustrating a configuration of a cable disposing unit 125A of a cover 120A according to a modification example of the embodiment. Specifically, a part (a) of Fig. 11 is a perspective view illustrating the configuration of the cover 120A, and a part (b) of Fig. 11 is a perspective view illustrating the configuration in the state where the positive electrode power cable 31 is disposed in the cable disposing unit 125A.

As illustrated in Fig. 11, the cover 120A of the modification example includes the cable disposing unit 125A instead of the cable disposing unit 125 included in the cover 120 in the above-described embodiment. The cable disposing unit 125A includes the opening and closing regulating unit 125b, the cable regulating unit 125d, a second recess 125e, and a third recess 125f. Because other configurations of the modification example are the same as those of the embodiment, the detailed description will be omitted.

Similarly to the opening and closing regulating unit 125b of the above embodiment, the opening and closing regulating unit 125b of the modification example is a member that restricts opening and closing (rotation) of the cover 120A with respect to the substrate holder 110 by disposing the positive electrode power cable 31 in the Y-axis negative direction. Specifically, the opening and closing regulating unit 125b is a wall that is disposed in the Z-axis positive direction of the second recess 125e and the Y-axis positive direction of the third recess 125f and is parallel to the YZ-plane. That is, the opening and closing regulating unit 125b is a member that is provided at an end on the Z-axis positive direction side of the wall on the X-axis positive direction side of the second cover wall 121b and protrudes in the Z-axis negative direction.

Similarly to the cable regulating unit 125d of the embodiment, the cable regulating unit 125d of the modification example is a member that regulates the movement of the positive electrode power cable 31 in the Z-axis positive direction. Specifically, the cable regulating unit 125d is a wall that is disposed in the Z-axis positive direction of the third recess 125f and is parallel to the YZ-plane.

The second recess 125e is a recess that is formed in the end on the Z-axis positive direction side of the wall on the X-axis positive direction side in the second cover wall 121b and recessed in the Y-axis negative direction (one side in the first direction). Specifically, the second recess 125e is a recess that is formed so as to penetrate the wall of the second cover wall 121b in the X axis direction and extends in the Y-axis direction.

The third recess 125f is a recess recessed from the second recess 125e in the Z-axis positive direction (the other side in the second direction intersecting the first direction). That is, the third recess 125f is recessed in the Z-axis positive direction from the end on the end of the Y-axis negative direction side of the second recess 125e, thereby being disposed in the Y-axis negative direction of the opening and closing regulating unit 125b and the Z-axis negative direction of the cable regulating unit 125d. As illustrated in part (b) of Fig. 11, the positive electrode power cable 31 is disposed in the third recess 125f. That is, the positive electrode power cable 31 is inserted into the second recess 125e from the Y-axis positive direction and is lifted in the Z-axis positive direction in order to be connected to the external conductive member (the negative electrode power cable 32 or the like of another energy storage apparatus 1), whereby the positive electrode power cable 31 is disposed in the third recess 125f.

As described above, at least a part (opening and closing regulating unit 125b) of the cover 120A is disposed in the Y-axis positive direction of the positive electrode power cable 31 while the positive electrode power cable 31 is connected to the external conductive member. That is, the positive electrode power cable 31 protrudes from the energy storage unit 10 to extend in the Y-axis negative direction, is changed in the X-axis positive direction, and is disposed in the third recess 125f. Thus, the positive electrode power cable 31 is disposed in the Y-axis negative direction of the opening and closing regulating unit 125b, and connected to the external conductive member. Consequently, the opening and closing (rotation) of the cover 120A with respect to the substrate holder 110 is regulated, and the movement in the Z-axis positive direction of the positive electrode power cable 31 is also regulated by the cable regulating unit 125d.

As described above, the same effects as those of the embodiment can be obtained in the energy storage apparatus 1 of the modification example. In particular, in the modification example, the second recess 125e and the third recess 125f are formed in the cover 120A, and the positive electrode power cable 31 is disposed in the third recess 125f, so that a part (opening and closing regulating unit 125b) of the cover 120A is disposed in the Y-axis positive direction of the positive electrode power cable 31. Thus, the opening of the cover 120A can be prevented while the positive electrode power cable 31 is connected to the external conductive member (the negative electrode power cable 32 or the like of the adjacent energy storage apparatus 1), so that safety can be improved. The third recess 125f may be a recess recessed in the Z-axis negative direction (one side in the second direction) from the second recess 125e.

### (Other modification examples)

Although the energy storage apparatuses 1 of the embodiment and its modification example are described above, the present invention is not limited to the embodiment and its modification example. That is, the embodiment and its modification example disclosed herein are illustrative in all respects and are not restrictive, and the scope of the present invention includes all changes within the meaning and scope equivalent to the claims.

In the embodiment and its modification example, the substrate unit 20 is attached to the end in the longitudinal direction (Y-axis direction) of the energy storage unit 10. However, the substrate unit 20 may be attached to the end in the X-axis direction or the Z-axis direction of the energy storage unit 10.

In the embodiment and its modification example, the first holder-side attaching unit 113 of the substrate holder 110 and the first cover-side attaching unit 122 of the cover 120 or 120A (hereinafter, referred to as the cover 120 and the like) are disposed on the side (Z-axis negative direction side) of the bottom 15a of the energy storage apparatus 1. However, the first holder-side attaching unit 113 and the first cover-side attaching unit 122 may be disposed at any position such as the Z-axis positive direction side or the central portion in the Z-axis direction.

In the embodiment and its modification example, the first holder-side attaching unit 113 of the substrate holder 110 is the shaft body, and is disposed by being inserted from the open side of the first cover-side attaching unit 122 of the cover 120 and the like. The shapes of the first holder-side attaching unit 113 and the first cover-side attaching unit 122 are not particularly limited. A member in any direction of the first cover-side attaching unit 122 may be opened, or a through-hole having no opening may exist and the first holder-side attaching unit 113 may be inserted into the through-hole. Alternatively, the first holder-side attaching unit 113 and the first cover-side attaching unit 122 may have opposite configurations, namely, the first cover-side attaching unit 122 may be a shaft body and be inserted into the first holder-side attaching unit 113. The cover 120 and the like may not be rotatably attached to the substrate holder 110.

In the embodiment and its modification example, the cover 120 and the like includes the first cover-side attaching unit 122 and the second cover-side attaching unit 123 that are attached to the substrate holder 110. However, the cover 120 may not include the second cover-side attaching unit 123 or the first cover-side attaching unit 122. The same applies to the side of the substrate holder 110. The cover 120 and the like may not include the rotation regulating unit 127.

In the embodiment and the modification example, because the positive electrode power cable 31 exists in the middle of the operation path in which the cover 120 and the like rotate, the positive electrode power cable 31 directly becomes the obstacle in opening the cover 120 and the like, and the cover 120 and the like cannot be opened. However, even when the positive electrode power cable 31 does not directly become the obstacle, the cover 120 and the like may have a protruding shape or the like so as to become the obstacle in opening the cover 120 or the like, or the positive electrode power cable 31 may have the protruding shape or the like.

In the embodiment and its modification example, the first substrate-side attaching unit 112 of the substrate holder 110 and the first energy storage-side attaching unit 16a of the energy storage unit 10 are disposed on the side (Z-axis negative direction side) of the bottom 15a of the energy storage apparatus 1. The first substrate-side attaching unit 112 and the first energy storage-side attaching unit 16a may be disposed at any position such as the Z-axis positive direction or the central portion in the Z-axis direction.

In the embodiment and its modification example, the first substrate-side attaching unit 112 of the substrate holder 110 is the shaft body, the member on the Z axis negative direction side of the first energy storage-side attaching unit 16a of the energy storage unit 10 is opened, and the first substrate-side attaching unit 112 is disposed by being inserted into the first energy storage-side attaching unit 16a. However, the shapes of the first substrate-side attaching unit 112 and the first energy storage-side attaching unit 16a are not particularly limited. A member in any direction of the first energy storage-side attaching unit 16a may be opened, or a through-hole having no opening may exist and the first substrate-side attaching unit 112 may be inserted into the through-hole. Alternatively, the first substrate-side attaching unit 112 and the first energy storage-side attaching unit 16a may have opposite configurations, namely, the first energy storage-side attaching unit 16a may be a shaft body and be inserted into the first substrate-side attaching unit 112. The substrate holder 110 may not be rotatably attached to the energy storage unit 10.

In the embodiment and its modification example, the substrate holder 110 includes the first substrate-side attaching unit 112 and the second substrate-side attaching unit 114a that are attached to the energy storage unit 10. However, the substrate holder 110 may not have the second substrate-side attaching unit 114a, or not have the first substrate-side attaching unit 112. The same applies to the side of the energy storage unit 10.

In the embodiment and its modification example, the fixing unit 116 of the substrate holder 110 is the protrusion that becomes thinner toward the tip portion, and fixes the substrate 200 at the position separated from the opposing surface of the substrate holder 110. However, the fixing unit 116 may not have the tapered shape, but may be fixed while the substrate 200 abuts on the opposing surface of the substrate holder 110.

In the embodiment and its modification example, the substrate 200 is fixed in the posture in which the plate surface faces the direction intersecting the vertical direction. However, the substrate 200 may be fixed in the posture in which the plate surface faces the vertical direction (in the horizontal direction).

In the embodiment and its modification example, the cover 120 and the like have the substrate regulating unit 126. However, as long as the substrate 200 can be firmly fixed by the fixing unit 116, the cover 120 and the like may not include the substrate regulating unit 126. Alternatively, instead of the cover 120 and the like including the substrate regulating unit 126, the substrate 200 may be fixed to the fixing unit 116 or the like using an adhesive or the like.

In the embodiment and its modification example, the connectors 210 and 220 of the substrate 200 are disposed at the end on the side different from the end of the shaft on which the cover 120 and the like rotate with respect to the substrate holder 110, but the connectors 210 and 220 may be disposed at the end on which the shaft exists.

In the embodiment and its modification example, the substrate holder 110 includes the fixing unit 116 that fixes the substrate 200 in the press-fitted state. However, the substrate holder 110 may fix the substrate 200 not in the press-fitted state but by the screwing or the like.

In the embodiment and its modification example, the opening and closing regulating unit 125b of the cover 120 and the like is disposed in the Y-axis positive direction of the positive electrode power cable 31 (the other side in the first direction). However, the opening and closing regulating unit 125b may be disposed in the Y-axis positive direction of the cable such as the negative electrode power cable 32 or a communication cable other than the positive electrode power cable 31. Alternatively, the cover 120 and the like may not include the cable regulating unit 125d.

In the embodiment and its modification example, the negative electrode power cable 32 of the adjacent energy storage apparatus 1 is exemplified as the external conductive member to which the positive electrode power cable 31 is connected. However, examples of the external conductive member include the positive electrode power cable 31 of the adjacent energy storage apparatus 1, the negative electrode power cable 32 or the positive electrode power cable 31 of the non-adjacent energy storage apparatus 1, and the external control device that controls the plurality of energy storage apparatuses 1.

In the embodiment and its modification example, the positive electrode power cable 31 of the energy storage apparatus 1 extends upward and is connected to the negative electrode power cable 32 of the upper energy storage apparatus 1. However, the positive electrode power cable 31 of the energy storage apparatus 1 may extend downward and be connected to the negative electrode power cable 32 of the energy storage apparatus 1 on the lower side. The negative electrode power cable 32 connected to the positive electrode power cable 31 of the upper energy storage apparatus 1 can extend directly upward using an L-shaped crimped terminal. In this case, in the embodiment, the positive electrode power cable 31 extends downward from the first recess 125a, and is disposed on the front surface (the Y axis negative direction of the first cover wall 121a) of the cover body 121. In the modification example of Fig. 11, the positive electrode power cable 31 extends downward from the second recess 125e, and is disposed on the side surface of the cover body 121 (the X-axis positive direction of the second cover wall 121b). In the modification example of Fig. 11, the third recess 125f may be a recess recessed in the Z-axis negative direction from the second recess 125e.

In the embodiment and its modification example, the cover 120 and the like are configured to be opened by being moved (rotated) in the Y-axis negative direction, and at least a part of the cover 120 and the like is disposed in the Y-axis positive direction of the positive electrode power cable 31. However, the cover 120 and the like may be configured to be opened by being moved (slid) toward the Z-axis positive direction, and at least a part of the cover 120 and the like may be disposed in the Z-axis negative direction (the Z-axis positive direction of the substrate 200) of the positive electrode power cable 31. The positive electrode power cable 31 may be disposed in the Z-axis positive direction of at least a part of the cover 120 and the like while connected to the external conductive member. In other words, at least a part of the cover 120 and the like may be disposed between the substrate 200 and the positive electrode power cable 31 in the Z-axis direction while the positive electrode power cable 31 is connected to the external conductive member. In this case, the Z-axis direction becomes the first direction, the Z-axis positive direction becomes one side of the first direction, and the Z-axis negative direction becomes the other side of the first direction. Similarly, the Z-axis negative direction may be set to one side of the first direction, the X-axis positive direction may be set to one side of the first direction, or the X-axis negative direction may be set to one side of the first direction. In the above case, even in a configuration in which the cover 120 and the like are removed by a screw or the like instead of being moved by sliding, a removal direction is limited, and the positive electrode power cable 31 may be located in a limited path.

In the embodiment and its modification example, the substrate accommodating unit 100 includes the substrate holder 110 and the cover 120 and the like, but the substrate accommodating unit 100 may not include the cover 120 and the like. Alternatively, the substrate accommodating unit 100 may not include the substrate holder 110. In this case, the substrate 200 may be attached to the cover 120 and the like, and the gripping unit 115 may be provided in the cover 120 and the like. Even when the substrate accommodating unit 100 has the substrate holder 110, the substrate 200 may be attached to the cover 120 and the like, and the gripping unit 115 may be provided in the cover 120 and the like. That is, the gripping unit 115 may be provided in the substrate accommodating unit 100.

In the above embodiment and its modification example, the inclined surface 115a and the gripping unit recess 115b are formed in the gripping unit 115 of the substrate unit 20. However, at least one of the inclined surface 115a and the gripping unit recess 115b may not be formed in the gripping unit 115. Alternatively, the gripping unit 115 may not be provided in the substrate unit 20.

A form constructed by any combination of the embodiment and the modification example is also included in the scope of the present invention.

The present invention can be implemented not only as the energy storage apparatus 1 but also as the cover 120 and the like, or as the cover 120 and the like and a cable (positive electrode power cable 31 or the like).

### INDUSTRIAL APPLICABILITY

The present invention can be applied to the energy storage apparatus including the energy storage device such as a lithium ion secondary battery.

### DESCRIPTION OF REFERENCE SIGNS

1, la, 1b: energy storage apparatus
2: shelf board
10: energy storage unit
11: energy storage device
11a: case
11b: positive electrode terminal
11c: negative electrode terminal
11d: spacer
12: bus bar frame
13: bus bar
13a, 30: cable
13b, 33, 34, 210, 220: connector
14: outer case body
15: outer case support
15a: bottom
15b, 15c, 17b, 17c: connection unit
16: substrate unit attaching unit
16a: first energy storage-side attaching unit
16b: wall
16c: second energy storage-side attaching unit
16d, 124: opening
17: outer case lid
17a: top surface
18: outer case
20: substrate unit
31: positive electrode power cable
32: negative electrode power cable
100: substrate accommodating unit
110: substrate holder
111: holder body
111a: first holder wall
111b: second holder wall
112: first substrate-side attaching unit
113: first holder-side attaching unit
114: upper-side attaching unit
114a: second substrate-side attaching unit
114b: second holder-side attaching unit
115: gripping unit
115a: inclined surface
115b: gripping unit recess
116: fixing unit
120, 120A: cover
121: cover body
121a: first cover wall
121b: second cover wall
122: first cover-side attaching unit
123: second cover-side attaching unit
123a: protrusion
125, 125A: cable disposing unit
125a: first recess
125b: opening and closing regulating unit
125c: inclined unit
125d: cable regulating unit
125e: second recess
125f: third recess
126: substrate regulating unit
127: rotation regulating unit
200: substrate
230: through-hole

## Claims

1. An energy storage apparatus including an energy storage unit including an energy storage device, the energy storage apparatus comprising:
a substrate electrically connected to the energy storage unit;
a cover disposed on one side in a first direction of the substrate;
a cable in which one end is electrically connected to the energy storage unit while the other end is connected to an external conductive member of the energy storage apparatus,
wherein the cable is disposed on one side in the first direction of at least a part of the cover while connected to the external conductive member.

2. The energy storage apparatus according to claim 1, wherein the energy storage unit is disposed on the other side in the first direction of the cover, and
the cable protrudes from the energy storage unit, extends to one side in the first direction, is disposed on one side in the first direction of the at least a part of the cover, and is connected to the external conductive member.

3. The energy storage apparatus according to claim 1 or 2, wherein the cover includes a first recess that is recessed toward one side in a second direction intersecting the first direction, and
the cable is disposed in the first recess.

4. The energy storage apparatus according to claim 1 or 2, wherein the cover includes:
a second recess recessed toward one side in the first direction; and
a third recess recessed from the second recess to one side or the other side in a second direction intersecting the first direction, and
the cable is disposed in the third recess.

5. The energy storage apparatus according to any one of claims 1 to 4, wherein the cover includes a regulating unit that regulates movement of the cable, and
the cable is disposed on one side in a second direction intersecting the first direction of the regulating unit, so that the regulating unit regulates the movement of the cable to the other side in the second direction.

6. The energy storage apparatus according to any one of claims 1 to 5, further comprising a substrate holder that holds the substrate and to which the cover is attached,
wherein the cover is rotatably attached to the substrate holder.
